(19) Europäisches Patentamt
European Patent Office
Office européen des brevets

(11) **EP 4 773 606 A1**

(12) **EUROPEAN PATENT APPLICATION**

(43) Date of publication:
08.07.2026 Bulletin 2026/28

(21) Application number: 25305013.2

(22) Date of filing: 06.01.2025

(51) International Patent Classification (IPC):
*H04N 19/46* (2014.01)   *H04N 19/70* (2014.01)
*H04N 19/85* (2014.01)

(52) Cooperative Patent Classification (CPC):
H04N 19/46; H04N 19/70; H04N 19/85

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
- DEMARTY, Claire-Helene
  35520 MONTREUIL LE GAST (FR)
- FRANCOIS, Edouard
  35890 BOURG DES COMPTES (FR)
- AUMONT, Franck
  35770 VERN SUR SEICHE (FR)
- LE MEUR, Olivier
  35160 TALENSAC (FR)

(74) Representative: Interdigital
Immeuble ZEN 2
845 A, avenue des Champs Blancs
35510 Cesson-Sévigné (FR)

(54) **TARGET COLOR VOLUME INDICATION USING SUPPLEMENTAL ENHANCEMENT INFORMATION**

(57)     Specific syntax elements define a target colour volume resulting from some processing on pictures in a video coding system. An encoded video bitstream carries such syntax elements from an encoding device to a decoding device using a Target Colour Volume Information Supplemental Enhancement Information message or a Content Colour Volume Supplemental Enhancement Information message, thus allowing the encoding device to provide to the decoding device the target colour volume and thus adapt the processing accordingly. An encoding method, a decoding method, an encoding apparatus and a decoding apparatus are described.

Figure 9A

**Description**

TECHNICAL FIELD

At least one of the present embodiments generally relates to a video encoding and decoding method and device, and more particularly to syntax elements defining a target color volume information using a Supplemental Enhancement Information message.

BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks for example using quad-tree partitioning. To reconstruct the video, the compressed data is decoded by inverse processes corresponding to the prediction, transform, quantization and entropy coding.

The color volume of a picture represents the set of colors of the picture sample values. It corresponds to the 3D shape containing all color values present in the picture and it may be defined, for example, par three vertices called primaries. It can be defined for example in the CIE 1931 xyY color space.

Tone mapping is generally a technique used in image processing and computer graphics to map one set of colours to another to approximate the appearance of high-dynamic-range (HDR) images in a medium that has a more limited dynamic range. Forms of tone mapping long precede digital photography. The manipulation of film and development process to render high contrast scenes, especially those shot in bright sunlight, on printing paper with a relatively low dynamic range, is effectively a form of tone mapping, although it is not usually called that. The normal process of exposure compensation, brightening shadows and altering contrast applied globally to digital images as part of a professional or serious amateur workflow is also a form of tone mapping.

Reducing the energy consumption of electronic devices has become a requirement not only for electronic devices manufacturers but also to limit, as much as possible, the environmental impact and to contribute to the emergence of a sustainable display industry. The increase in display resolution from SD to HD to 4K and soon to 8K and beyond, as well as the introduction of high dynamic range imaging, has brought about a corresponding increase in energy requirements of display devices. This is not consistent with the global need to reduce energy consumption. Indeed, displays are an important source of energy consumption, whether it be for battery-powered devices (e.g., smartphones) or in the global video distribution chain.

Organic Light Emitting Diode (OLED) displays are finding more and more widespread use because of numerous advantages compared to transmissive displays such as Thin-Film Transistor Liquid Crystal Displays (TFT-LCDs). Rather than using a uniform backlight, OLED displays are composed of LEDs as image pixels. OLEDs power consumption is therefore highly correlated to the image content and can be readily estimated by considering the luminance level of the displayed image pixels. Although OLED displays consume energy in a controllable manner, they are still the most important source of energy consumption in a video transmission chain.

It is therefore interesting to consider energy-aware images, i.e., those that will need less energy when displayed on CE displays, for example using OLED displays. Energy-aware transformations applied to contents involve luma and colour manipulation of the content to create a new content that will consume less energy when displayed.

SUMMARY

According to an aspect of at least one embodiment, a method comprises obtaining an encoded picture, obtaining metadata defining a colour volume corresponding to a result of a processing to be applied on the encoded picture after decoding, obtaining an identifier corresponding to the colour volume, inserting colour volume metadata and identifier in a supplemental enhancement information message, generating video data comprising the encoded picture and the supplemental enhancement information message, and providing the video data.

According to an aspect of at least one embodiment, a method comprises obtaining, from video data, an encoded picture, information representative of a processing to be applied on the encoded picture after decoding, an identifier corresponding to a colour volume corresponding to a result of the processing, a supplemental enhancement information message comprising metadata defining a colour volume and an associated identifier, decoding the encoded picture to obtain a decoded picture, comparing the identifier corresponding to the colour volume corresponding to the result of the processing with the identifier associated with the color volume metadata of the supplemental enhancement information message, responsively applying the processing to the decoded picture based on the color volume metadata, and providing the processed picture.

According to an aspect of at least one embodiment, an apparatus comprises one or more processors configured to obtain an encoded picture, obtain metadata defining a colour volume corresponding to a result of a processing to be applied on the encoded picture after decoding, obtain an identifier corresponding to the colour volume, insert colour volume metadata and identifier in a supplemental enhancement information message, generate video data comprising the encoded picture and the supplemental enhancement information message, and provide the video data.

According to an aspect of at least one embodiment, an apparatus comprises one or more processors configured to obtain, from video data, an encoded picture, information representative of a processing to be applied on the encoded picture after decoding, an identifier corresponding to a colour volume corresponding to a result of the processing, a supplemental enhancement information message comprising metadata defining a colour volume and an associated identifier, decode the encoded picture to obtain a decoded picture, compare the identifier corresponding to the colour volume corresponding to the result of the processing with the identifier associated with the color volume metadata of the supplemental enhancement information message, responsively apply the processing to the decoded picture based on the color volume metadata, and provide the processed picture.

One or more of the present embodiments also provide a computer readable storage medium having stored thereon instructions according to at least part of any of the methods described above. One or more embodiments also provide a computer readable storage medium having stored thereon a bitstream generated according to the encoding methods described above. One or more embodiments also provide a computer program product including instructions for performing at least part of any of the methods described above.

BRIEF SUMMARY OF THE DRAWINGS

Figure 1 illustrates a block diagram of an example of a system in which various aspects and embodiments are implemented.

Figure 2 describes an example of a context in which following embodiments can be implemented.

Figure 3 illustrates a block diagram of an example of video encoder.

Figure 4 illustrates a block diagram of an example of video decoder.

Figure 5 illustrates an example of partitioning undergone by an image of an original video sequence.

Figure 6 illustrates different color volumes that may be described according to embodiments.

Figure 7 illustrates an example of video distribution system where the bitstream comprises a TCVI SEI message according to embodiments.

Figure 8A illustrates an example process for encoding video data comprising a TCVI SEI message according to embodiments.

Figure 8B illustrates an example process for encoding video data comprising a CCV SEI message according to embodiments.

Figure 9A illustrates an example process for decoding video data comprising a TCVI SEI message according to embodiments.

Figure 9B illustrates an example process for decoding video data comprising a CCV SEI message according to embodiments.

DETAILED DESCRIPTION

Various embodiments relate to the colour volume characteristics that can be associated with pictures. Such a colour volume may change according to some image processing algorithms applied to the associated pictures, e.g., tone mapping operations, and in particular, tone mapping operations which target the control of the energy needed to display some content.

Embodiments propose to use a Supplemental Enhancement Information (SEI) message to carry a target colour volume resulting from some processing on pictures, with associated metadata, in particular, metadata specifying the colour volume, an identifier allowing to link the colour volume to other metadata and processing, and some adaptation-related information in terms of luminance, brightness, quality and/or energy as a result of some processing. The SEI message can be a new SEI message introduced hereafter or a modified version of the existing Content Colour Volume SEI message with the addition of a flag to indicate that the colour volume is the target color volume, after some modification of the content by a processing, (in other words, the color volume of the picture samples resulting from the processing) and not the content colour volume. When a post-decoding process to be applied to the video (directly after decoding, or after intermediate post-decoding processes such as for example picture resampling) is signaled in the bitstream, a device may select the post-decoding process, if adapted to its capabilities (for example in terms of computing resources, or power consumption). If this post-decoding process uses as input some information of colour volume, the device may select among all target colour volume SEI messages in the bitstream, the target colour volume SEI message that corresponds to the post-decoding process.

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

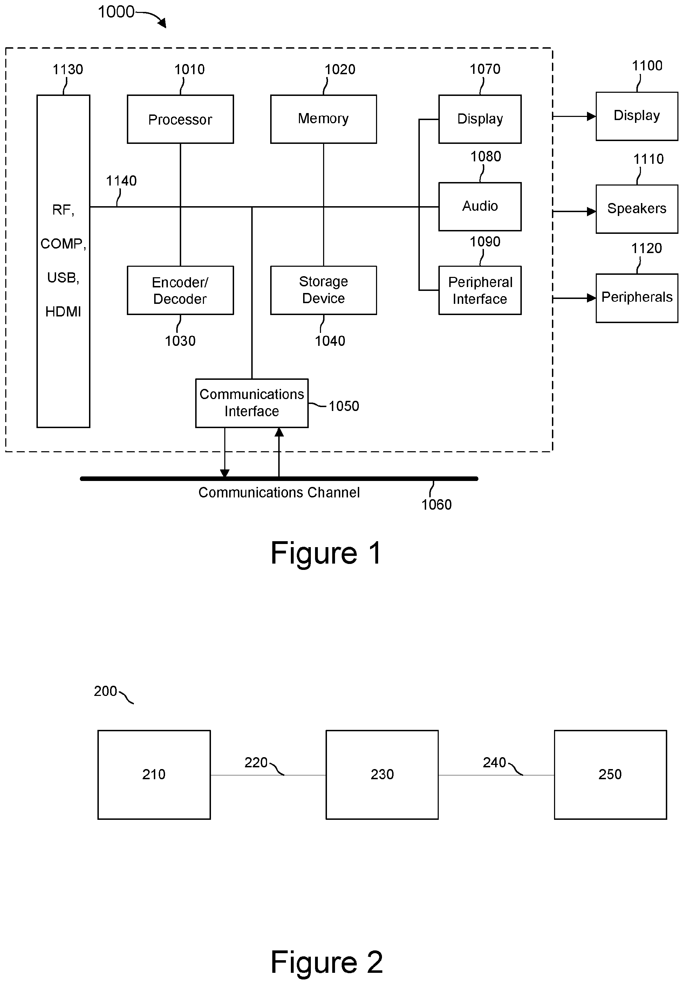

**Figure** 1 illustrates a block diagram of an example of a system in which various aspects and embodiments are implemented. System 1000 can be embodied as a device or apparatus including the various components described below and is configured to perform one or more of the aspects described in this document. Examples of such devices include, but are not limited to, various electronic devices such as computers, smartphones, tablets, digital multimedia set top boxes, digital television receivers, personal video recording systems, connected home appliances, vehicle entertainment systems, vehicle control systems, drones, video surveillance cameras, and more generally data servers. Elements of system 1000, singly or in combination, can be embodied in a single integrated circuit (IC), multiple Ics, and/or discrete components. For example, in at least one embodiment, the processing and encoder/decoder elements of system 1000 are distributed across multiple Ics and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or anon-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash-based memory, magnetic disk drive, solid-state drive (SSD), and/or optical disk drive. The storage device 1040 can include an internal storage device, an attached storage device (including detachable and non-detachable storage devices), and/or a network accessible storage device (a.k.a. cloud storage), as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions described further below. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform one or more of the aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items when performing the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or anon-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265), or VVC (Versatile Video Coding, also known as H.266).

The input to the elements of system 1000 can be provided through various input devices as indicated in block 1130. Such input devices include, but are not limited to, a radio frequency (RF) portion that receives an RF signal transmitted, for example, over the air by a broadcaster, a Component (COMP) input terminal (or a set of COMP input terminals), a Universal Serial Bus (USB) input terminal, and/or a High-Definition Multimedia Interface (HDMI) input terminal. Other examples include composite video.

In various embodiments, the input devices of block 1130 have associated respective input processing elements as known in the art. For example, the RF portion can be associated with elements suitable for selecting a desired frequency (also referred to as selecting a signal, or band-limiting a signal to a band of frequencies), down converting the selected signal, band-limiting again to a narrower band of frequencies to select (for example) a signal frequency band which can be referred to as a channel in certain embodiments, demodulating the down converted and band-limited signal, performing error correction, and demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna. The RF portion may comply with standard specifications such as those published by Digital Video Broadcasting (DVB), Advanced Television Systems Committee (ATSC), Association of Radio Industries and Businesses (ARIB) or others.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Figure 2** describes an example of a context in which following embodiments can be implemented. In this context 200, a system 210 transmits a video stream to a system 230 using a communication channel 220. Examples of system 210 comprise a camera, a storage device, a computer, a drone, a video surveillance camera, a server or any device capable of delivering a video stream. The video stream is either encoded and transmitted by the system 210 or received and/or stored by the system 210 and then transmitted. The communication channel 220 is a wired (for example Internet, Ethernet, Cable network) or a wireless (for example WiFi, 3G, 4G or 5G, satellite TV, terrestrial TV) network link. The system 230 receives and decodes the video stream to generate a sequence of decoded pictures. An example of system 230 is a set top box. The obtained sequence of decoded pictures is then transmitted to a display system 250 using a communication channel 240, that could be a wired or wireless network as introduced above. The display system 250 then displays said pictures. An example of display system 250 is a television or display monitor.

In an embodiment, the system 230 and the display system 250 are comprised in a single device, thus combining the reception, decoding and display of the video stream. Examples of such device are a television, a computer, a tablet, a smartphone, a head-mounted display, a vehicle entertainment system, a medical device.

In an embodiment, the system 250 is not a display device but a processing device, for example to use the images for machine-vision purposes. In this case, the sequence of decoded pictures is not displayed but used as input for analysis or further processing.

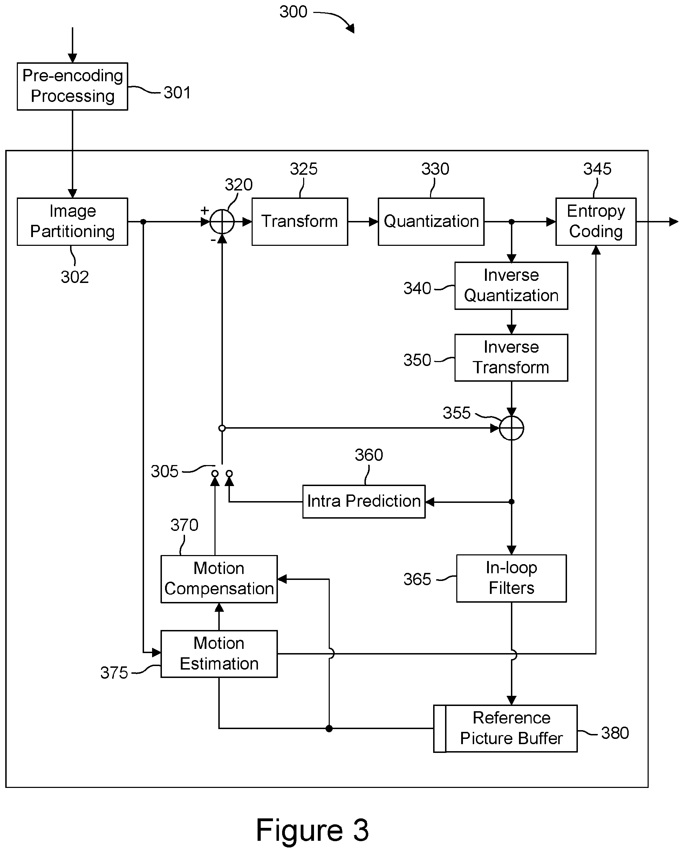

**Figure 3** illustrates a block diagram of an example of video encoder. Variations of this encoder 300 are contemplated, but the encoder 300 is described below for purposes of clarity without describing all expected variations. Before being encoded, the video sequence may go through pre-encoding processing 301, for example, applying a color transform to the input color picture (e.g., conversion from RGB 4:4:4 to YcbCr 4:2:0), or performing a remapping of the input picture components in order to get a signal distribution more resilient to compression (for instance using a histogram equalization of one of the color components). Metadata can be associated with the pre-processing and attached to the bitstream, for example in the form of supplemental enhancement information (SEI) messages, for the standards that include such mechanism.

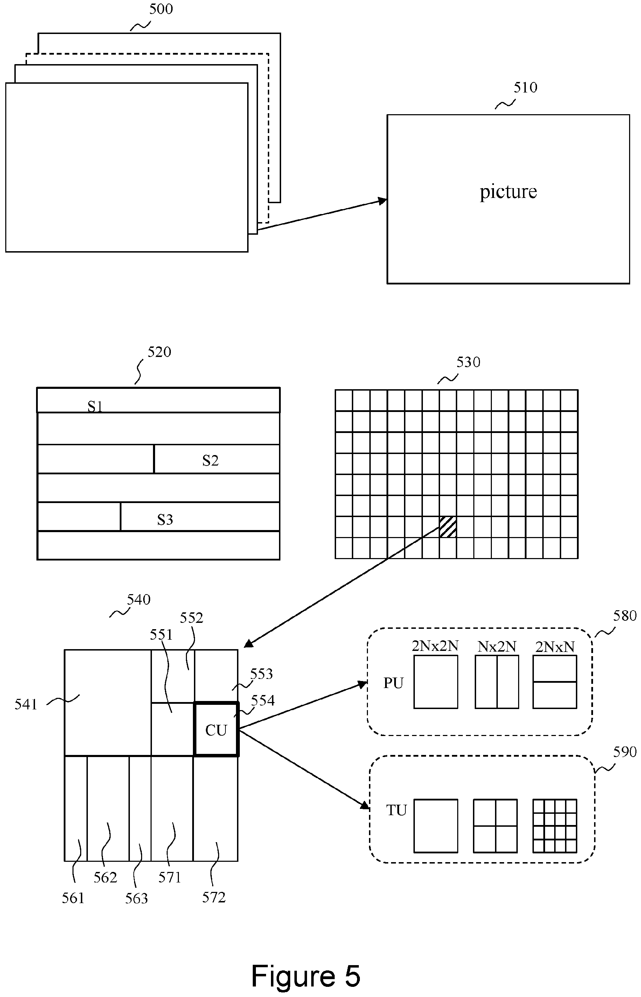

In the encoder, a picture is encoded by the encoder elements as described below. The picture to be encoded is partitioned (302), for example as further described in figure 5, and processed in units such as coding units. Each unit is encoded using, for example, either an intra or inter mode. When a unit is encoded in an intra mode, it performs intra prediction (360). In an inter mode, motion estimation (375) and compensation (370) are performed. The encoder decides (305) which one of the intra mode or inter mode to use for encoding the unit, and indicates the intra/inter decision by, for example, a prediction mode flag. Prediction residuals are calculated, for example, by subtracting (320) the predicted block from the original image block. The prediction residuals are then transformed (325) and quantized (330). The quantized transform coefficients, as well as motion vectors and other syntax elements, are entropy coded (345) to output a bitstream.

The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (340) and inverse transformed (350) to decode prediction residuals. Combining (355) the decoded prediction residuals and the predicted block, an image block is reconstructed. In-loop filters (365) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (380) for further use.

The encoder also generally performs video decoding as part of encoding video data.

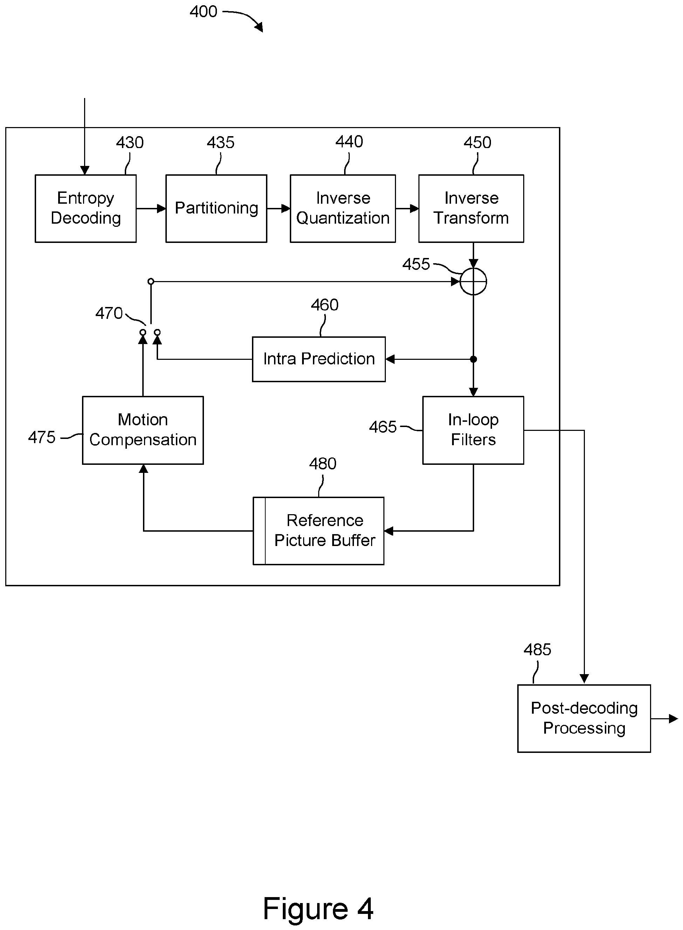

**Figure 4** illustrates a block diagram of an example of video decoder. In the decoder 400, a bitstream is decoded by the decoder elements as described below. Video decoder 400 generally performs a decoding pass reciprocal to the encoding pass as described in previous figure. The input of the decoder includes a video bitstream, which can be generated by video encoder 300 of figure 3. The bitstream is first entropy decoded (430) to obtain transform coefficients, motion vectors, and other coded information. The picture partition information indicates how the picture is partitioned. The decoder may therefore divide (435) the picture according to the decoded picture partitioning information. The transform coefficients are de-quantized (440) and inverse transformed (450) to decode the prediction residuals. Combining (455) the decoded prediction residuals and the predicted block, an image block is reconstructed. The predicted block can be obtained (470) from intra prediction (460) or motion-compensated prediction (i.e., inter prediction) (475). In-loop filters (465) are applied to the reconstructed image. The filtered image is stored at a reference picture buffer (480).

The decoded picture can further go through post-decoding processing (485), for example, an inverse color transform (e.g., conversion from YCbCr 4:2:0 to RGB 4:4:4) or an inverse remapping performing the inverse of the remapping process performed in the pre-encoding processing (301 of figure 3). The post-decoding processing can use metadata derived in the pre-encoding processing and signaled in the bitstream. The post-processing may also comprise neural network post-processing filters designed for different purposes, as described below.

**Figure 5** illustrates an example of partitioning undergone by an image of an original video sequence. An original video sequence 500 comprises a plurality of pictures 510. A picture comprises a plurality of pixels, generally arranged in a grid comprising rows and columns. It is considered in this document that a pixel is composed of three components: a luminance component and two chrominance components. Other types of pixels are however possible comprising less or more components such as only a luminance component or an additional depth component or an additional transparency component.

A picture is divided into a plurality of coding entities. First, as represented by reference 530, a picture is divided in a grid of blocks called coding tree units (CTU). A CTU consists of a block of luminance samples together with two corresponding blocks of chrominance samples. The size of such block is generally N×N, and N is generally a power of two having a maximum value of "128" for example. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile. In the example represented by reference 520, the picture 510 is divided into three slices S1, S2 and S3 of the raster-scan slice mode, each comprising a plurality of tiles (not represented), each tile comprising only one brick.

As represented by reference 540, a CTU may be partitioned into the form of a hierarchical tree of one or more sub-blocks called coding units (CU). The CTU is the root (i.e., the parent node) of the hierarchical tree and can be partitioned in a plurality of CU (i.e., child nodes). Each CU becomes a leaf of the hierarchical tree if it is not further partitioned in smaller CU or becomes a parent node of smaller CU (i.e., child nodes) if it is further partitioned. During the coding of a picture, the partitioning is adaptive, each CTU being partitioned to Optimize a compression efficiency.

For example, the CTU 540 is first partitioned in four square CU using a quadtree type partitioning. The upper left CU 541 is a leaf of the hierarchical tree since it is not further partitioned, i.e., it is not a parent node of any other CU. The upper right CU is further partitioned in four smaller square CU 551, 552, 553, 554 using again a quadtree type partitioning. The bottom left CU is vertically partitioned in three rectangular CU 561, 562, 563 using a ternary tree type partitioning. The bottom right CU is vertically partitioned in two rectangular CU 571, 572 using a binary tree type partitioning.

In HEVC appeared the concept of prediction unit (PU) and transform unit (TU). Indeed, in HEVC, the coding entity that is used for prediction (i.e., a PU) and transform (i.e., a TU) can be a subdivision of a CU. For example, as represented in the figure, a CU of size 2N×2N, can be divided in PU 580 of size N×2N or of size 2N×N. In addition, said CU can be divided in four TU 590 of size N×N or in "16" TU of size (N/2)×(N/2). Other video coding standards also use these notions. In VVC, except in some particular cases, frontiers of the TU and PU are aligned on the frontiers of the CU. Consequently, a CU comprises generally one TU and one PU.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side. In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

Video coding standards like AVC, HEVC and VVC enable embedding of metadata in video bitstreams through Supplemental Enhancement information (SEI) messages. Those messages are defined either in the core standard or companion standard like Versatile Supplemental Enhancement Information (VSEI), and more get added in successive versions of these standards.

A SEI message is a syntax structure that is defined in various MPEG standards to allow carriage of metadata. It is a specific type of Network Access Layer (NAL) unit, which is the elementary packet in MPEG bitstream formats. The SEI syntax may vary slightly across different standards, but it commonly contains at least a payload type, a payload length, and the payload itself. The SEI syntax defined for VVC is illustrated in Table 1 as an example.

Table 1

| sei_message() { | Descriptor |
|---|---|
| payloadType = 0 | |
| do { | |
| payload_type byte | u(8) |
| payloadType += payload_type byte | |
| } while( payload_type_byte = = 0xFF) | |
| payloadSize = 0 | |
| do { | |
| payload_size_byte | u(8) |
| payloadSize += payload_size_byte | |
| } while( payload_size_byte = = 0xFF ) | |
| sei_payload( payloadType, payloadSize ) | |
| } | |

In addition, a specific syntax structure is typically defined for each payload type and instantiated by a sei_payload syntax structure according to each payload type. For example, a specific SEI message related to Content Colour Volume (CCV) SEI message is defined in the ISO/IEC 23002-7 specification and specifies a colour volume associated with pictures comprised in the bitstream in which the CCV SEI message is inserted. The CCV SEI message describes the colour volume of pictures coded in the bitstream. This colour volume is specified through precise colour primaries values (ccv_primaries_x, ccv_primaries_y) and precise information about luminance (ccv_min_luminance_value, ccv_max_luminance_value, ccv_avg_luminance_value).

The syntax of such CCV SEI message is illustrated in Table 2.

Table 2

| content_colour_volume( payloadSize ) { | Descriptor |
|---|---|
| ccv_cancel_flag | u(1) |
| if( !ccv_cancel_flag ) { | |
| ccv_persistence_flag | u(1) |
| ccv_primaries_present_flag | u(1) |
| ccv_min_luminance_value_present_flag | u(1) |
| ccv_max_luminance_value_present_flag | u(1) |
| ccv_avg_luminance_value_present_flag | u(1) |
| ccv_reserved_zero_2bits | u(2) |

(continued)

| | |
|---|---|
| if( ccv_primaries_present_ flag) | |
| for( c = 0; c < 3; c++ ) { | |
| ccv_primaries_x[ c ] | i(32) |
| ccv_primaries_y[ c ] | i(32) |
| } | |
| if( ccv_min_luminance_value_present_flag) | |
| ccv_mm_luminance_value | u(32) |
| if( ccv _maxluminance_value_present_ flag) | |
| ccv_max_luminance_value | u(32) |
| if( ccv_avg_luminance_value_present _flag) | |
| ccv_avg_luminance_value | u(32) |
| } | |
| } | |

The ISO/IEC 23002-7 specification also defines a Mastering Display Colour Volume (MDCV) SEI message that describes the colour volume information related to the display that has been used to generate the pictures encoded in the bitstream in which the SEI is inserted. Indeed, generally the pictures are tone-mapped by a professional specialist on a reference display and the MDCV SEI message provides the parameters of such display. The syntax of the MDCV SEI message is given in Table 3.

Table 3

| mastering_display_colour_volume( payloadSize ) { | Descriptor |
|---|---|
| for( c = 0; c < 3; c++ ) { | |
| mdcv_display_primaries_x[ c ] | u(16) |
| mdcv_display_primaries_y[ c ] | u(16) |
| } | |
| mdcv_white_point_x | u(16) |
| mdcv_white_point_y | u(16) |
| mdcv_max_display_mastering_luminance | u(32) |
| mdcv_min_display_mastering_luminance | u(32) |
| } | |

The CCV SEI message and the MDVC SEI message can be considered as complementary information qualifying the content that is coded in the bitstream. The MDVC SEI message describes the colour volume of the mastering display, while the CCV SEI message describes the real colour volume occupied by the decoded pictures.

Embodiments described hereafter have been designed with the foregoing in mind and propose a new SEI message that specifies a Target Colour Volume, that is the colour volume that results from a given processing applied on a (set of) picture(s), after decoding and possibly after other post-decoding processes such as picture resampling. This SEI message contains metadata specifying the Target Colour Volume and an identifier of this Target Colour Volume that enables to link the SEI with a (post-)processing operation. Some Adaptation metadata related to the adaptation of the luminance level, the energy level and the quality level that result from the new content colour volume obtained after the corresponding processing may be added. In an alternative, it is proposed to enhance the existing Content Colour Volume SEI message with metadata that will allow to identify such a CCV SEI message with a given process applied on a picture or a group of pictures, thus extending the current specification to any post processed picture and not only the decoded picture. It proposed to add Adaptation metadata in this case also.

In at least one embodiment, a new SEI message may carry information about the maximal colour volume of picture samples resulting from a post-decoding filtering process applied to the pictures to which the SEI message is associated. An example of post-decoding filtering process is a tone mapping process. The new SEI message may be identified under the names "Target Colour Volume Information" (TCVI) or "Mapped Colour Volume Information" or any other naming.

The syntax is similar to the one of the SEI message Content Colour Volume, with some essential differences. The colour volume related information relate to the target colour volume after some processing is applied on the pictures, and not on the original colour volume of the pictures. Two additional metadata elements allow the identification of a specific Target Colour Volume Information SEI message by for example one or more specific (post-) processings. TCVI SEI may be used as input of a post-processing operation to indicate the target colour volume expected for the output content from this post-processing operation, and thus may be used to adjust the parameters of this pos-processing operation. An example of syntax for the TCVI SEI is illustrated in table 4.

Table 4

| target_colour_volume_information( payloadSize ) { | Descriptor |
|---|---|
| tcvi_id | uv(e) |
| tcvi_cancel_flag | u(1) |
| if( !tcvi_cancel_flag) { | |
| tcvi_persistence_flag | u(1) |
| tcvi_primaries_present_flag | u(1) |
| tcvi_min_luminance_value_present_flag | u(1) |
| tcvi_max_luminance_value_present_flag | u(1) |
| tcvi_avg_luminance_value_present_flag | u(1) |
| tcvi_max_content_light_level_present_flag | u(1) |
| tcvi_max_pic_average_light_level_present_flag | u(1) |
| tcvi_reserved_zero_2bits | u(2) |
| if( tcvi_primaries_present_flag) | |
| for( c = 0; c < 3; c++ ) { | |
| tcvi_primaries_x[ c ] | i(32) |
| tcvi_primaries_y[ c ] | i(32) |
| } | |
| if( tcvi_min_luminance_value_present_flag ) | |
| tcvi_min_luminance_value | u(32) |
| if( tcvi_max_luminance_value_present_flag) | |
| tcvi_max_luminance_value | u(32) |
| if( tcvi_avg_luminance_value_present_flag ) | |
| tcvi_avg_luminance_value | u(32) |
| if( tcvi_max_content_light_level_present_flag) | |
| tcvi_max_content_light_level | u(16) |
| if( tcvi_max_pic_average_light_level_present_flag ) | |
| tcvi_max_pic_average_light_level | u(16) |
| } | |

The different syntax elements of table 4 are described below.

The target colour volume information (TCVI) SEI message describes the expected colour volume characteristics of picture samples resulting from the application to the associated picture samples of a post-decoding mapping process that refers to the TCVI SEI message. These colour volume characteristics are expressed in terms of a nominal range, although deviations from this range may occur.

The variable transferCharacteristics may be specified as follows. If an alternative transfer characteristics SEI message is present for the CLVS, transferCharacteristics may be set equal to preferred_transfer_characteristics. Otherwise, (an alternative transfer characteristics SEI message is not present for the CLVS), transferCharacteristics may be set equal to vui_transfer_characteristics.

The target content colour volume SEI message may not be present, and decoders may ignore it, when any of the following conditions is true: when any of the values of transferCharacteristics, vui_colour_primaries, and vui_matrix_coeffs has a value defined as unknown or unspecified, or when the value of vui_transfer_characteristics is equal to 2, 4, or 5 or when the value of vui_colour_primaries is equal to 2.

The following may apply when converting the signal from a non-linear to a linear representation. If the value of transferCharacteristics is equal to 1, 6, 7, 14, or 15, the Rec. ITU-R BT.1886 reference electro-optical transfer function may be used to convert the signal to its linear representation, where the value of screen luminance for white is set equal to 100 candelas per square metre, the value of screen luminance for black is set equal to 0 candelas per square metre, and the value of the exponent of the power function is set equal to 2.4. Otherwise, if the value of transferCharacteristics is equal to 18, the hybrid log-gamma reference electro-optical transfer function specified in Rec. ITU-R BT.2100 may be used to convert the signal to its linear representation, where the value of nominal peak luminance of the display is set equal to 1000 candelas per square metre, the value of the display luminance for black is set equal to 0 candelas per square metre, and the value of system gamma is set equal to 1.2. Otherwise (the value of transferCharacteristics is not equal to 1, 6, 7, 14, 15, or 18) when the content colour volume SEI message is present, the exact inverse of the transfer function specified in specified in the VUI parameters may be used to convert the non-linear signal to a linear representation.

tcvi_id contains an identifying number that may be used to identify the purpose of the TCVI. The value of tcvi_id may be used to indicate that the output of some conversion process or post-processing operation, such as a tone mapped conversion of the picture, constrains its output sample values inside the Target Colour Volume defined by the SEI message. When more than one TCVI SEI message is present with the same value of tcvi_id, the content of these TCVI SEI messages may be the same. When TCVI SEI messages that have more than one value of tcvi_id are present, this may indicate that the processes indicated by the different values of tcvi_id are alternatives that are provided for different purposes or that a cascading of processes is to be applied in a sequential order. The value of tcvi_id may be in the range of 0 to $2^{32}$ - 2, inclusive. Values of tcvi_id from 0 to 255 and from 512 to $2^{31}$ - 1 may be used as determined by the application. Values of tcvi_id from 256 to 511, inclusive, and from $2^{31}$ to $2^{32}$ - 2, inclusive, may be reserved for future. Decoders may ignore the TCVI SEI messages containing a value of tcvi_id in the range of 256 to 511, inclusive, or in the range of $2^{31}$ to $2^{32}$ - 2, inclusive.

The tcvi_id can be used to support different processes that are suitable for different display scenarios. For example, different values of tcvi_id may correspond to different colour volumes supported by displays. In another example, different values of tcvi_id may correspond to different colour volumes corresponding to different energy reduction ratios, different luminance adaptation ratios, different quality levels, etc., when for example displaying the processed pictures.

In another embodiment, the tcvi_id can be used to identify a Target Colour Volume as defined by the target colour volume SEI message.

In embodiments, tcvi_id may be signaled conditionally to the tcvi_identifier_present_flag flag that indicates whether some identification information is present. If tcvi_identifier_present_flag equals to 1, some identification information may be present. If tcvi_identified_present_flag equals to 0, no identification information may be present.

tcvi_cancel_flag equal to 1 indicates that the SEI message may cancel the persistence of any previous target colour volume information SEI message in output order that applies to the current layer. tcvi_cancel_flag equal to 0 indicates that target colour volume information may follow.

tcvi_persistence_flag may specify the persistence of the target colour volume information SEI message for the current layer.

tcvi_persistence_flag equal to 0 may specify that the target colour volume information applies to the current processed picture only.

tcvi_persistence_flag equal to 1 may specify that the target colour volume information SEI message may apply to the current processed picture and may persist for all subsequent pictures of the current layer in output order until one or more of the following conditions are true: a new CLVS of the current layer begins or the bitstream ends or a picture in the current layer in an Access Unit (AU) associated with a target colour volume information SEI message is output that follows the current picture in output order.

tcvi_primaries_present_flag equal to 1 may specify that the syntax elements tcvi_primaries_x[ c ] and tcvi_primaries_y[ c ] are present. tcvi_primaries_present_flag equal to 0 may specify that the syntax elements tcvi_primaries _x [ c ] and tcvi_primaries _y[ c ] are not present.

tcvi_min_luminance_present_flag equal to 1 may specify that the syntax element tcvi_min_luminance is present. tcvi_min_luminance_present_flag equal to 0 may specify that the syntax element tcvi_min_luminance is not present.

tcvi_max_luminance_present_flag equal to 1 may specify that the syntax element tcvi_max_luminance is present. tcvi_max_luminance_present flag equal to 0 may specify that the syntax element tcvi_max_luminance is not present.

tcvi_avg_luminance_present flag equal to 1 may specify that the syntax element tcvi_avg_luminance is present. tcvi_avg_luminance_present_flag equal to 0 may specify that the syntax element tcvi_avg_luminance is not present.

tcvi_max_content_light_level_present_flag equal to 1 may specify that the syntax element tcvi_max_content_light_level is present. tcvi_max_content_light_level_present_flag equal to 0 may specify that the syntax element tcvi_maxcontent_light_level is not present.

tcvi_max_pic_average_light_level_present _flag equal to 1 may specify that the syntax element tcvi_max_pic_average_light_level is present. tcvi_max_pic_average_light_level_present _flag equal to 0 may specify that the syntax element tcvi_max_pic_average_light_level is not present.

In an embodiment, it may be a requirement of bitstream conformance that the values of tcvi_primaries_present_flag, tcvi_min_luminance_present_flag, tcvi_max_luminance_present_flag, tcvi_avg_luminance_present_flag, tcvi_max_content_light_level_present_flag and tcvi_max_pic_level_present_flag may not all be equal to 0.

In an embodiment, tcvi_reserved_zero_2bits[ i ] may be equal to 0 in bitstreams. Other values for reserved_zero_2bits[ i ] may be reserved for future use . Decoders may ignore the value of reserved_zero_2bits[ i ].

tcvi_primaries_x[ c ], when in the range of 5 to 37 000, inclusive, may specify the normalized x chromaticity coordinate of the colour primary component c of the maximal target colour volume for all pictures for which the SEI message persists, after applying a processing corresponding to the target colour volume, according to the CIE 1931 definition of x as specified in ISO/CIE 11664-1, in increments of 0.00002. When tcvi_primaries _x[ c ] is not in the range of 5 to 37 000, inclusive, the normalized x chromaticity coordinate of the colour primary component c of the maximal target colour volume may be unknown or unspecified or specified by other means not specified in this document.

tcvi_primaries_y[ c ], when in the range of 5 to 42 000, inclusive, may specify the normalized y chromaticity coordinate of the colour primary component c of the maximal target colour volume for all pictures for which the SEI message persists, after applying a processing corresponding to the target colour volume, according to the CIE 1931 definition of y as specified in ISO/CIE 11664-1, in increments of 0.00002. When tcvi_primaries_y[ c ] is not in the range of 5 to 42 000, inclusive, the normalized y chromaticity coordinate of the colour primary component c of the maximal target colour volume may be unknown or unspecified or specified by other means not specified in this document.

For describing colour volumes that use red, green, and blue colour primaries, it is suggested that index value c equal to 0 may correspond to the green primary, c equal to 1 may correspond to the blue primary, and c equal to 2 may correspond to the red colour primary specified in the VUI parameters.

tcvi_max_luminance, when in the range of 50 000 to 100 000 000, may specify the nominal maximum luminance of the maximal target colour volume for all pictures for which the SEI message persists, after applying a processing corresponding to the target colour volume, in units of 0.0001 candelas per square metre. When tcvi_max_luminance is not in the range of 50 000 to 100 000 000, the nominal maximum luminance of the maximal target colour volume may be indicated to be unknown or unspecified or specified by other means not specified in this document.

tcvi_min_luminance, when in the range of 1 to 50 000, may specify the nominal minimum luminance of the maximal target colour volume for all pictures for which the SEI message persists, after applying a processing corresponding to the target colour volume, in units of 0.0001 candelas per square metre. When tcvi_min_luminance is not in the range of 1 to 50 000, the nominal minimum luminance of the target colour volume may be unknown or unspecified or specified by other means not specified in this document. When tcvi_cv_max_luminance is equal to 50 000, tcvi_min_luminance may be not be equal to 50 000.

tcvi_avg_luminance may specify the nominal average luminance of the maximal target colour volume for all pictures for which the SEI message persists, after applying a processing corresponding to the target colour volume, in units of 0.0001 candelas per square metre. When tcvi_avg_luminance is 0, the nominal average luminance of the maximal target colour volume may be unknown or unspecified or specified by other means not specified in this document.

The value of tcvi_min_luminance, when present, may be less than or equal to tcvi_avg_luminance, when present. The value of tcvi_avg_luminance, when present, may be less than or equal to tcvi_max_luminance, when present. The value of tcvi_min_luminance, when present, may be less than or equal to tcvi_max_luminance, when present.

**tcvi_max_content_light_level,** when not equal to 0, may indicate an upper bound on the maximum light level of the target colour volume in a 4:4:4 representation of red, green, and blue colour primary intensities (in the linear light domain) for all pictures for which the SEI message persists, in units of candelas per square metre. When tcvi_max_content_light_level equal to 0, no such upper bound may be indicated.

**tcvi_max_pic_average_light_level,** when not equal to 0, may indicate an upper bound on the maximum average light level of the colour volume in a 4:4:4 representation of red, green, and blue colour primary intensities (in the linear light domain) for all pictures for which the SEI message persists, in units of candelas per square metre. When tcvi_max_pic_average_light_level equal to 0, no such upper bound may be indicated.

In the above definitions of the syntax elements, other embodiments may define the syntax elements relatively to the target colour volume after applying a processing, the average target colour volume after applying a processing, or the minimal target colour volume after applying a processing or any other selection criterion of a target colour volume corresponding to a processing.

In another embodiment, the above semantics for the syntax elements may be modified as follows.

tcvi_primaries_x[ c ] may specify the normalized x chromaticity coordinate of the colour primary component c of the (e.g., maximal) target content colour volume, according to the CIE 1931 definition of x and y as specified in ISO/CIE 11664-1, in normalized increments of 0.00002.

tcvi_primaries_y[ c ] may specify the normalized y chromaticity coordinates of the colour primary component c of the (e.g., maximal) target content colour volume, according to the CIE 1931 definition of x and y as specified in ISO/CIE 11664-1, in normalized increments of 0.00002.

For describing target colour volumes that use red, green, and blue colour primaries, it is suggested that index value c equal to 0 may correspond to the green primary, c equal to 1 may correspond to the blue primary, and c equal to 2 may correspond to the red colour primary specified in the VUI parameters.

The values of tcvi_primaries_x[ c ] and tcvi_primaries_y[ c ] may be in the range of -5 000 000 to 5 000 000, inclusive.

When tcvi_primaries_x[ c ] and tcvi_primaries_y[ c ] are not present, they may be inferred to be equal to the normalized x and y chromaticity coordinates, respectively, specified by vui_colour_primaries.

tcvi_min_luminance_value may specify the normalized minimum luminance value, according to CIE 1931, that is expected to be present in the content after the processing, where values are normalized to Lo or Lc as specified in the VUI parameters according to the indicated transfer characteristics of the signal. The values of tcvi_min_luminance_value may be in normalized increments of 0.0000001.

tcvi_max_luminance_value may specify the maximum luminance value, according to CIE 1931, that is expected to be present in the content after the processing, where values are normalized to Lo or Lc as specified in the VUI parameters according to the transfer characteristics of the signal. The values of tcvi_max_luminance_value may be in normalized increments of 0.0000001.

tcvi_avg_luminance_value may specify the average luminance value, according to CIE 1931, that is expected to be present in the content after the processing, where values are normalized to Lo or Lc as specified in the VUI parameters according to the transfer characteristics of the signal. The values of tcvi_avg_luminance _value may be in normalized increments of 0.0000001.

The resulting domain from this conversion process might or might not represent light in a source or display domain - it is merely a gamut representation domain rather than necessarily being a representation of actual light in either the scene or display domain. Therefore, the values corresponding to tcvi_min_luminance_value, tcvi_max_luminance_value, and tcvi_avg_luminance_value might not necessarily correspond to a true luminance value.

The value of tcvi_min_luminance_value, when present, may be less than or equal to tcvi_avg_luminance_value, when present. The value of tcvi_avg_luminance_value, when present, may be less than or equal to tcvi_max_luminance_value, when present. The value of tcvi_min_luminance_value, when present, shall be less than or equal to tcvi_max_luminance _value, when present.

When the visually relevant region does not correspond to the entire cropped post-processed picture, such as for "letterbox" encoding of video content with a wide picture aspect ratio within a taller cropped post-processed picture, the indicated tcvi_min_luminance_value, tcvi_max_luminance_value, and tcvi_avg_luminance_value may correspond only to values within the visually relevant region.

In at least one embodiment, the TCVI SEI message may carry, in addition to the target color volume information, additional information representing the adaptation (i.e., Adaptation metadata) in terms of luminance, energy and/or quality that may result from the processing which corresponds to the target colour volume described in the TCVI SEI message, as illustrated in the example syntax of table 5. Some additional information related to the applied processing may be added, such as the type of display compatible with the applied processing. In this example syntax, the TCVI may not carry any identifier.

Table 5

| target_colour_volume_information( payloadSize ) { | Descriptor |
|---|---|
| tcvi_cancel_flag | u(1) |
| if( !tcvi_cancel_flag) { | |
| tcvi_persistence_flag | u(1) |
| tcvi_primaries_present flag | u(1) |

(continued)

| | |
|---|---|
| tcvi_min_luminance_value_present_flag | u(1) |
| tcvi_max_luminance_value_present_flag | u(1) |
| tcvi_avg_luminance_value_present_flag | u(1) |
| tcvi max content light level_present flag | u(1) |
| tcvi max_pic average light level_present flag | u(1) |
| tcvi_adaptation_information_present_flag | u(1) |
| tcvi_reserved_zero_2bits | u(2) |
| if( tcvi_primaries_present_flag) | |
|    for( c = 0; c < 3; c++ ) { | |
|      tcvi_primaries_x[ c ] | i(32) |
|      tcvi_primaries_y[ c ] | i(32) |
|    } | |
| if( tcvi_min_luminance_value_present_flag ) | |
|    tcvi_min_luminance_value | u(32) |
| if( tcvi_max_luminance_value_present_flag) | |
|    tcvi_max_luminance_value | u(32) |
| if( tcvi_avg_luminance_value_present_flag ) | |
|    tcvi_avg_luminance_value | u(32) |
| if( tcvi_max_content_light_level_present_flag) | |
|    tcvi_max_content_light_level | u(16) |
| if( tcvi_max_pic_average_light_level_present_flag ) | |
|    tcvi_max_pic_average_light_level | u(16) |
| if( tcvi_adaptation_information_present_flag ){ | |
|    tcvi_ratio_luminance_value | u(8) |
|    tcvi_ratio_luminance_sign_flag | u(1) |
|    tcvi_ratio_energy_value | u(8) |
|    tcvi_ratio_energy_sign_flag | u(1) |
|    tcvi_quality_metric | u(3) |
|    tcvi expected_quality | u(8) |
|    tcvi_display_model | u(4) |
|    } | |
| } | |

In an alternative embodiment, additional information representing the adaptation in terms of brightness or lightness that may result from the processing which corresponds to the target colour volume are added in the TCVI SEI message.

The different syntax elements of table 5 are described below.

tcvi_adaptation_information_present_flag may indicate if additional information related to the adaptation of an original colour volume into the target colour volume as a result of a processing is present. If tcvi_adaptation_information_present _flag equals to 1, additional information related to the adaptation of an original colour volume into the target colour volume as a result of a processing may be present. If tcvi_adaptation_information_present_flag equals to 0, no additional information related to the adaptation of an original colour volume into the colour volume as a result of a processing may be present.

tcvi_ratio_luminance_value, when tcvi_adaptation_information_present _flag is equal to 1, may specify the amount of luminance adaptation through luminance decrease or increase (accordingly with the value of the tcvi_ratio_luminance_sign_flag field) that may be achieved by the processing corresponding to the target colour volume. It could be coded over 8 bits in a preferred embodiment. In some embodiment, when tcvi_ratio_luminance_value is equal to 0, it may be interpreted as the amount of luminance adaptation (as a result of the processing corresponding to the target colour volume) may not be conveyed or not known. In this case, the tcvi_ratio_luminance_sign_flag may be omitted (e.g., not transmitted).

In a variant, tcvi_ratio_luminance_value may specify the expected percentage of luminance adaptation through (e.g., average) luminance decrease or increase (accordingly with the value of the tcvi_ratio_luminance_sign_flag field) that the processing may achieve. The percentage of luminance adaptation may be considered relatively to the average luminance of the content before applying the processing. The percentage ratio may be computed using the following equation:

$$ratio = \frac{tcvi\_ratio\_luminance\_value}{100}$$

The expected luminance after application of the processing may be derived as follows:

If *tcvi_ratio_luminance_sign_flag* == 1:

$$luminance_{new} = (1 - ratio) * luminance_{old}$$

If tcvi_ratio_luminance_sign_flag == 0:

$$luminance_{new} = (1 + ratio) * luminance_{old}$$

tcvi_ratio_luminance_sign_flag may specify if the value of tcvi_ratio_luminance_value may be considered as negative or positive. If tcvi_ratio_luminance_sign_flag equals 0, the processing related to the target colour volume may result in an increase of content luminance. If tcvi_ratio_luminance _sign_flag equals 1, this processing may result in a decrease in terms of content luminance.

tcvi_ratio_energy_value,, when tcvi_adaptation_information_present_flag is equal to 1, may specify the amount of energy adaptation through energy decrease or increase (accordingly with the value of the tcvi_ratio_energy _sign_flag field) that may be achieved by the processing corresponding to the target colour volume. It could be coded over 8 bits in a preferred embodiment. In some embodiment, when tcvi _ratio_energy_value is equal to 0, it may be interpreted as the amount of energy adaptation (as a result of the processing corresponding to the target colour volume) may not be conveyed or not known. In this case, the tcvi_ratio_energy_sign_flag may be omitted (e.g., not transmitted).

tcvi_ratio_energy_sign_flag may specify if the value of tcvi_ratio_energy_value may be considered as negative or positive. If tcvi_ratio_energy_sign_flag equals 0, the processing related to the target colour volume may result in an increase of energy consumption. If tcvi_ratio_energy_sign_flag equals 1, the processing related to the target colour volume may result in a decrease in terms of energy consumption.

tcvi_expected_quality may specify the quality of the video after applying the processing related to the target colour volume. Examples of metrics are PSNR, V-MAF or SSIM values for the modified picture after applying the processing related to the target colour volume as specified in the table below. This parameter may be expressed as an absolute value or as a percentage value of reduction of quality according to a selected quality metric in comparison with its nominal value.

In the above definitions of the adaptation metadata syntax elements, other embodiments may define the syntax elements relatively to average values of luminance ratio, expected quality and energy ratio. In other embodiments, the syntax elements may be defined to maximal, minimal values of luminance ratio, expected quality and energy ratio. Other criteria may be used to select the values of the luminance ratio, expected quality and energy ratio.

tcvi_video_quality_metric may indicate the quality metric to be considered when considering the change (e.g., loss) of quality after applying the processing related to the target colour volume. An example of set of quality metrics is illustrated in the Table 6.

Table 6

| tcvi_video_quality_metric field value | Metric name |
|---|---|
| 0x00 | PSNR |

(continued)

| tcvi_video_quality_metric field value | Metric name |
|---|---|
| 0x01 | SSIM |
| 0x02 | wPSNR |
| 0x03 | WS-PSNR |
| 0x04 | V-MAF |
| 0x05..0x07 | Reserved for future metrics |

tcvi_display_model is a bit field mask which may indicate the display models on which the processing related to the target colour volume may be used.

Table 7

| Bit number | Display model |
|---|---|
| 0 | Transmissive pixel |
| 1 | Emissive pixel |
| 2..3 | Reserved for future types |

For example, tcvi_display_type_field=$11_2$ (corresponding to having the two first bits equal to 1 in the bitfield, in the base-2 numeral system) means that the processing can be used for both "Transmissive pixel" and "Emissive pixel" display models.

In at least one embodiment, the TCVI SEI message may carry simultaneously, in addition to the target color volume information, additional information representing the adaptation that may result from the processing and an identifier, therefore combining the syntax of tables 4 and 5, as illustrated in table 8. The syntax elements of table 8 are identical to those described in tables 4 and 5.

Table 8

| target_colour_volume_information( payloadSize ) { | Descriptor |
|---|---|
| tcvi_cancel_flag | u(1) |
| if( !tcvi_cancel_flag) { | |
| tcvi_persistence_flag | u(1) |
| tcvi_primaries_present_flag | u(1) |
| tcvi_min_luminance_value_present_flag | u(1) |
| tcvi_max_luminance_value_present_flag | u(1) |
| tcvi_avg_luminance_value_present_flag | u(1) |
| tcvi_max_content_light_level_present_flag | u(1) |
| tcvi_max_pic_average_light_level_present_flag | u(1) |
| tcvi_identifier_present_flag | u(1) |
| tcvi_adaptation_information_present_flag | u(1) |
| tcvi_reserved_zero_2bits | u(2) |
| if( tcvi_primaries_present_flag) | |
| for( c = 0; c < 3; c++ ) { | |
| tcvi_primaries_x[ c ] | i(32) |
| tcvi_primaries_y[ c ] | i(32) |
| } | |
| if( tcvi_min_luminance_value_present_flag ) | |

(continued)

| | Descriptor |
|---|---|
| tcvi_min_luminance_value | u(32) |
| if( tcvi_max_luminance_value_present_flag) | |
| tcvi_max_luminance_value | u(32) |
| if( tcvi_avg_luminance_value_present_flag ) | |
| tcvi_avg_luminance_value | u(32) |
| if( tcvi_max_content_light_level_present_flag) | |
| tcvi_max_content_light_level | u(16) |
| if( tcvi_max_pic_average_light_level_present_flag ) | |
| tcvi_max_pic_average_light_level | u(16) |
| if( tcvi_identifier_present_flag) | |
| tcvi_id | uv(e) |
| if( tcvi_adaptation_information_present_flag ){ | |
| tcvi_ratio_luminance_value | u (8) |
| tcvi_ratio_luminance_sign_flag | u(1) |
| tcvi_ratio_energy_value | u(8) |
| tcvi_ratio_energy_sign_flag | u(1) |
| tcvi_quality_metric | u(3) |
| tcvi_expected_quality | u(8) |
| tcvi_display_model | u(4) |
| } | |
| } | |

In at least one embodiment, in addition to the elements of Table 8, the TVCI SEI message may carry information related to the white point resulting from the processing applied to the pictures and related to the target colour volume, as illustrated in table 9.

Table 9

| target_colour_volume_information( payloadSize ) { | Descriptor |
|---|---|
| tcvi_cancel_flag | u(1) |
| if( !tcvi_cancel_flag) { | |
| tcvi_persistence_flag | u(1) |
| tcvi_primaries_present_flag | u(1) |
| tcvi_white_point_present_flag | u(1) |
| tcvi_min_luminance_value_present flag | u(1) |
| tcvi_max_luminance_value_present_flag | u(1) |
| tcvi_avg_luminance_value_present_flag | u(1) |
| tcvi_max_content_light_level_present_flag | u(1) |
| tcvi_max_pic_average_light_level_present_flag | u(1) |
| tcvi_identifier_present_flag | u(1) |
| tcvi_adaptation_information_present_flag | u(1) |
| tcvi_reserved_zero_2bits | u(2) |
| if( tcvi_primaries_present_flag) | |

(continued)

| | |
|---|---|
| for( c = 0; c < 3; c++ ) { | |
| tcvi_primaries_x[ c ] | i(32) |
| tcvi_primaries_y[ c ] | i(32) |
| } | |
| if( tcvi _white_point_present_flag ){ | |
| tcvi_white_point_x | u(16) |
| tcvi_white_point_y | u(16) |
| } | |
| if( tcvi_min_luminance_value_present_flag ) | |
| tcvi_min_luminance_value | u(32) |
| if( tcvi_max_luminance_value_present_flag) | |
| tcvi_max_luminance_value | u(32) |
| if( tcvi_avg_luminance_value_present_flag ) | |
| tcvi_avg_luminance_value | u(32) |
| if( tcvi_max_content_light_level_present_flag) | |
| tcvi_max_content_light_level | u(16) |
| if( tcvi_max_pic_average_light_level_present_flag ) | |
| tcvi_max_pic_average_light_level | u(16) |
| if( tcvi_identifier_present_flag) | |
| tcvi_id | uv(e) |
| if( tcvi_adaptation_information_present_flag ){ | |
| tcvi_ratio_luminance_value | u(8) |
| tcvi_ratio_luminance_sign_flag | u(1) |
| tcvi_ratio_energy_value | u(8) |
| tcvi_ratio_energy_sign_flag | u(1) |
| tcvi_quality_metric | u(3) |
| tcvi_expected_quality | u(8) |
| tcvi_display_model | u(4) |
| } | |
| } | |

Compared to the tables described above, the newly added syntax elements related to the white point information are the following.

tcvi_white_point_present _flag equal to 1 may specify that the syntax elements tcvi_white_point_x and tcvi_white_point_y may be present. tcvi_white_point_present _flag equal to 0 may specify that the syntax elements tcvi_white_point _x[ c ] and tcvi_white_point _y[ c ] may not be present.

tcvi_white_point_x, when in the range of 5 to 37 000, inclusive, may specify the normalized x chromaticity coordinate of the white point of the maximal target colour volume for all pictures for which the SEI message may persist, after applying a processing corresponding to the target colour volume, according to the CIE 1931 definition of x as specified in ISO/CIE 11664-1, in normalized increments of 0.00002. When tcvi_white_point_x is not in the range of 5 to 37 000, inclusive, the normalized x chromaticity coordinate of the white point of the maximal target colour volume may be indicated to be unknown or unspecified or specified by other means not specified in this document.

tcvi_white_point_y, when in the range of 5 to 42 000, inclusive, may specify the normalized y chromaticity coordinate of the white point of the maximal target colour volume for all pictures for which the SEI message may persist, after applying a processing corresponding to the target colour volume, according to the CIE 1931 definition of y as specified in ISO/CIE 11664-1, in normalized increments of 0.00002. When tcvi_white_point_y is not in the range of 5 to 42 000, inclusive, the normalized y chromaticity coordinate of the white point of the maximal target colour volume may be indicated to be unknown or unspecified or specified by other means not specified in this document.

It may be a requirement of bitstream conformance that the values of tcvi_primaries_present_flag, tcvi_white_point_present_flag, tcvi_min_luminance_present_flag, tcvi_max_luminance_present_flag, and tcvi_avg_luminance_present_flag may not all be equal to 0.

In an alternative embodiment, the transfer functions may also be defined in the Target Colour Volume SEI message.

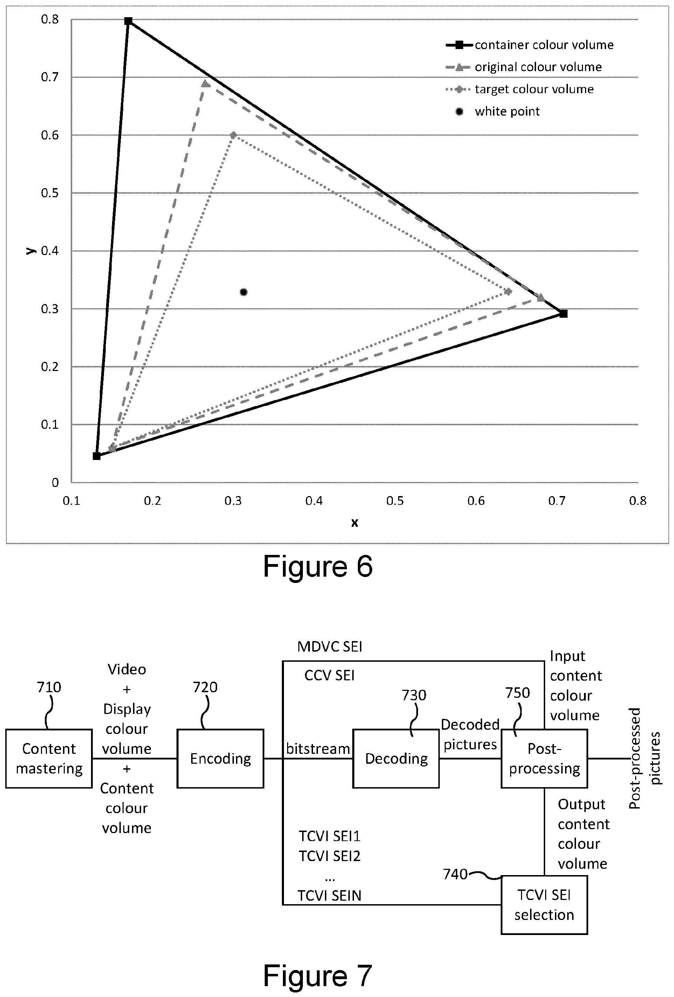

**Figure 6** illustrates different color volumes that may be described according to embodiments. As introduced above, the target colour volume signaled in the TCVI SEI provides a precise description of the colour volume resulting from the processing operations on some pictures. In addition, a container colour volume may be signaled in the TCVI SEI. The container colour volume may specify the format in which the colour samples of the content are coded (represented) and may be in general standardized, for example as ITU-R BT.709, BT.2020, BT.2100 specifications, in the Video Usability Information (VUI) of the AVC, HEVC or VVC specifications, or in the ITU-T H.273 specification. This ensures interoperability for interpreting the signal coded in those containers. The figure illustrates the concepts of container colour volume, of target colour volume, that corresponds to the colour volume of the pictures expected resulting from the application of some processing operations on some input pictures which have an original colour volume. The container colour volume may (and is expected to) contain the original colour volume and the target colour volume. In existing SEI messages describing Tone Mapping operations, such as the SL-HDR information SEI message defined in the ETSI TS 103.433 specification, output colour volumes are described or referred to as container colour volumes, i.e., larger and less precise colour volumes than the proposed target colour volume. In addition to the syntax proposed in the embodiments above, the addition of the container colour volume information for the target colour volume may be done using the syntax described in table 10.

Table 10

| ... | |
|---|---|
| tcvi_container_colour_description_present_flag | u(1) |
| if( tcvi_container_colour_description_present_flag ) { | |
|    tcvi_container_colour_primaries | u(8) |
|    tcvi_container_transfer_characteristics | u(8) |
|    tcvi_container_matrix_coeffs | u(8) |
|    tcvi_container_full_range_flag | u(1) |
| } | |
| ... | |

The semantics of the corresponding syntax elements is as follows:

tcvi_container_colour_primaries may have the same semantics as specified in clause 8.1 of ISO/IEC 23091 for the ColourPrimaries syntax element, except as follows. tcvi_container_colour_primaries may specify the colour primaries used to represent the samples of the picture after applying a processing corresponding to the target colour volume. When tcvi_container_colour_primaries is not present in the TCVI SEI message, the value of tcvi_container_colour_primaries may be inferred to be equal to ColourPrimaries.

tcvi_container_transfer_characteristics may have the same semantics as specified in clause 8.2 of ISO/IEC 23091 for the TransferCharacteristics syntax element, except as follows. tcvi_container_transfer_characteristics may specify the transfer characteristics of the picture after applying a processing corresponding to the target colour volume, rather than the transfer characteristics used for the CLVS. When tcvi_container_transfer_characteristics is not present in the TCVI SEI message, the value of tcvi_container_transfer_characteristics may be inferred to be equal to TransferCharacteristics.

tcvi_container_matrix_coeffs may describe the equations used in deriving luma and chroma signals from the green, blue, and red, or Y, Z, and X primaries. Its semantics may apply to the pictures after applying a processing corresponding to the target colour volume and may be as specified for MatrixCoefficients in Rec. ITU-T H.273 | ISO/IEC 23091-2 with BitDepthY and BitDepthC being equal to outTensorBitDepthY and outTensorBitDepthC, respectively.

tcvi_container_full_range_flag may indicate the scaling and offset values applied in association with the matrix coefficients as specified by tcvi_container_matrix_coeffs. Its semantics may be as specified for the VideoFullRange-Flag parameter in Rec. ITU-T H.273 ISO/IEC 23091-2.

Embodiments above propose to add a new TCVI SEI message for carrying information representing Colour Volume resulting from some processing on pictures. Another solution to carry such information may be to re-use the existing Content Colour Volume SEI message and to add a flag to indicate if the color volume is related to the content as received from the bitstream or after its processing through some post-process.

In at least one embodiment, three additional metadata may be added to the syntax of the existing Content Colour Volume SEI message, to allow the identification of a specific Content Colour Volume SEI message by for example one or more specific (post-) processings, and to indicate whether the Content Colour Volume may apply to the current decoded picture or if it may apply to the current decoded picture after some post processing. For this, the first bit of the 2 reserved bits of the existing CCV SEI may be used to indicate whether the identifier is carried or not, through the ccv_identifier_present_flag. The 2nd bit may remain reserved for future use. This syntax is illustrated in table 11.

Table 11

| content_colour_volume( payloadSize ) { | Descriptor |
|---|---|
| ccv_cancel_flag | u(1) |
| if( !ccv_cancel_flag ) { | |
| ccv_persistence_flag | u(1) |
| ccv_primaries_present_flag | u(1) |
| ccv_min_luminance_value_present_flag | u(1) |
| ccv_max_luminance_value_present_flag | u(1) |
| ccv_avg_luminance_value_present_flag | u(1) |
| ccv_identifier_present_flag | u(1) |
| ccv_reserved_zero_1bits | u(1) |
| if( ccv_primaries_present_flag) | |
| for( c = 0; c < 3; c++ ) { | |
| ccv_primaries_x[ c ] | i(32) |
| ccv_primaries_y[ c ] | i(32) |
| } | |
| if( ccv_min_luminance _value_present_flag) | |
| ccv_mm_luminance_value | u(32) |
| if( ccv_max_luminance_value_present_flag) | |
| ccv_max_luminance_value | u(32) |
| if( ccv_avg_luminance_value_present_flag) | |
| ccv_avg_luminance_value | u(32) |
| if( ccv_identifier_present_flag){ | |
| ccv_id | uv(e) |
| ccv_for_decoded_picture_flag | u(1) |
| } | |
| } | |

The semantics of the corresponding syntax elements is as follows:
The content colour volume SEI message may describe the colour volume characteristics of the associated decoded pictures if ccv_for_decoded_picture_flag equals to 1 or the expected (e.g., maximal) colour volume characteristics of the associated decoded pictures after some post-processing if ccv_for_decoded_picture_flag equals to 0. These colour volume characteristics are expressed in terms of a nominal range, although deviations from this range may occur.

ccv identifier_present flag may indicate whether some identification information is present. If ccv identifier_present _flag equals to 1, some identification information may be present. If ccv _identified_present _flag equals to 0, no identification information may be present.

ccv_id may contain an identifying number that may be used to identify the purpose of the CCV. The value of ccv_id may be used to indicate that the output of some conversion process, such as a tone mapped conversion of the picture, has its sample values inside the Content Colour Volume defined by the SEI message. In other words, the colour volume defined by the CCV may be related to the content after being processed. When more than one CCV SEI message is present with the same value of ccv_id, the content of these CCV SEI messages may be the same. When CCV SEI messages are present that have more than one value of ccv_id, this may indicate that the processes indicated by the different values of ccv_id are alternatives that are provided for different purposes or that a cascading of processes is to be applied in a sequential order (an order that is not specified in this document). The value of ccv_id may be in the range of 0 to $2^{32} - 2$, inclusive.

Values of ccv_id from 0 to 255 and from 512 to $2^{31} - 1$ may be used as determined by the application. Values of ccv_id from 256 to 511, inclusive, and from $2^{31}$ to $2^{32} - 2$, inclusive, may be reserved for future use. Decoders may ignore the CCV SEI messages containing a value of ccv_id in the range of 256 to 511, inclusive, or in the range of $2^{31}$ to $2^{32} - 2$, inclusive.

The ccv_id can be used to support different processes that are suitable for different display scenarios. For example, different values of ccv_id may correspond to different colour volumes supported by displays. In another example, different values of ccv_id may correspond to different colour volumes corresponding to different energy reduction ratios, different luminance adaptation ratios, different quality levels, etc.

In another embodiment, the ccv_id can be used to identify a Content Colour Volume as defined by the content colour volume information SEI message.

ccv_for_decoded_picture_flag may indicate if the content colour volume applies to the current decoded picture or if it applies to the current decoded picture after some post processing. If ccv_for_decoded_picture_flag equals to 1, the content colour volume may apply to the current decoded picture. If ccv_for_decoded_picture_flag equals to 0, the content colour volume may apply to the current decoded picture after some post processing.

In an embodiment, ccv _identifier_present _flag may both indicate that some identification information is present and that the colour volume defined in the CCV SEI message may apply to the current decoded picture after some post-processing.

ccv_persistence_flag may specify the persistence of the content colour volume SEI message for the current layer.

ccv_persistence_flag equal to 0 may specify that the content colour volume may apply to the current decoded picture only, if ccv_for_decoded_picture_flag is equal to 1, or to the current post-processed picture only, if ccv_for_decoded_picture_flag is equal to 0.

ccv_persistence_flag equal to 1 may specify that the content colour volume SEI message may apply to the current decoded picture, if ccv_for_decoded_picture_flag is equal to 1, or to the current post-processed picture only, if ccv_for_decoded_picture_flag is equal to 0, and may persist for all subsequent pictures of the current layer in output order until one or more of the following conditions are true: when a new CLVS of the current layer begins or when the bitstream ends or when a picture in the current layer in an AU associated with a content colour volume SEI message is output that follows the current picture in output order.

In a variant embodiment, ccv_persistence_flag equal to 0 may specify that the content colour volume may apply to the current picture only.

ccv_primaries_x[ c ] and ccv_primaries_y[ c ] may specify the normalized x and y chromaticity coordinates, respectively, of the colour primary component c of the nominal content colour volume of the associated decoded pictures if ccv_for_decoded_picture_flag equals to 1 or the expected (e.g., maximal) colour volume characteristics of the associated decoded pictures after some post-processing if ccv_for_decoded_picture_flag equals to 0, according to the CIE 1931 definition of x and y as specified in ISO/CIE 11664-1, in normalized increments of 0.00002. For describing colour volumes that use red, green, and blue colour primaries, it may be suggested that index value c equal to 0 may correspond to the green primary, c equal to 1 should correspond to the blue primary, and c equal to 2 should correspond to the red colour primary specified in the VUI parameters.

The values of ccv_primaries_x[ c ] and ccv_primaries_y[ c ] may be in the range of -5 000 000 to 5 000 000, inclusive.

When ccv_primaries_x[ c ] and ccv_primaries_y[ c ] are not present, they may be inferred to be equal to the normalized x and y chromaticity coordinates, respectively, specified by vui_colour_primaries.

ccv_min_luminance_value may specify the normalized minimum luminance value, according to CIE 1931, that is expected to be present in the associated decoded content if ccv_for_decoded_picture_flag equals to 1 or in the associated decoded content after some post-processing if ccv_for_decoded_picture_flag equals to 0, where values are normalized to Lo or Lc as specified in the VUI parameters according to the indicated transfer characteristics of the signal. The values of ccv_min__luminance _value may be in normalized increments of 0.0000001.

ccv_max_luminance_value may specify the maximum luminance value, according to CIE 1931, that is expected to be present in the associated decoded content if ccv_for_decoded_picture_flag equals to 1 or in the associated decoded content after some post-processing if ccv_for_decoded_picture_flag equals to 0, where values are normalized to Lo or Lc as specified in the VUI parameters according to the transfer characteristics of the signal. The values of ccv_max_luminance_value may be in normalized increments of 0.0000001.

ccv_avg_luminance_value may specify the average luminance value, according to CIE 1931, that is expected to be present in the associated decoded content if ccv_for_decoded_picture_flag equals to 1 or in the associated decoded content after some post-processing if ccv_for_decoded_picture_flag equals to 0, where values are normalized to Lo or Lc as specified in the VUI parameters according to the transfer characteristics of the signal. The values of ccv _avg_luminance_value may be in normalized increments of 0.0000001.

When the visually relevant region does not correspond to the entire cropped decoded or post-processed (depending on the value of ccv_for_decoded_picture_flag) picture, such as for "letterbox" encoding of video content with a wide picture aspect ratio within a taller cropped decoded or post-processed (depending on the value of ccv_for_decoded_picture_flag) picture, the indicated ccv_min_luminance_value, ccv_max_luminance_value, and ccv_avg_luminance_value may correspond only to values within the visually relevant region.

In at least one embodiment, metadata indicating the adaptation in terms of luminance, energy and/or quality that may result from the processing which corresponds to the content colour volume described in the existing CCV SEI message may be added to the syntax as illustrated in the example syntax of table 12.

Table 12

| content_colour_volume( payloadSize) { | Descriptor |
|---|---|
| ccv_cancel_flag | u(1) |
| if( !ccv_cancel_flag ) { | |
| ccv_persistence_flag | u(1) |
| ccv_primaries_present_flag | u(1) |
| ccv_min_luminance_value_present_flag | u(1) |
| ccv_max_luminance_value_present_flag | u(1) |
| ccv_avg_luminance_value_present_flag | u(1) |
| ccv_adaptation_information_present_flag | u(1) |
| ccv_reserved_zero_1bits | u(1) |
| if( ccv_primaries_present_flag) | |
| for( c = 0; c < 3; c++ ) { | |
| ccv_primaries_x[ c ] | i(32) |
| ccv_primaries_y[ c ] | i(32) |
| } | |
| if( ccv_min_luminance _value_present_flag) | |
| ccv_mm_luminance_value | u(32) |
| if( ccv_max_luminance_value_present_flag) | |
| ccv_max_luminance_value | u(32) |
| if( ccv_avg_luminance_value_present_flag) | |
| ccv_avg luminance_value | u(32) |
| if( ccv_adaptation_information_present_flag){ | |
| ccv_ratio_luminance_value | u(8) |
| ccv_ratio_luminance_sign_flag | u(1) |

(continued)

| | |
|---|---|
| ccv_ratio_energy_value | u(8) |
| ccv_ratio_energy_sign_flag | u(1) |
| ccv_quality_metric | u(3) |
| ccv_expected_quality | u(8) |
| ccv_display_model | u(4) |
| } | |
| } | |

In case adaptation metadata are specified, they may correspond to some processing applied on a set of pictures and the colour volume defined in the Content Colour Volume SEI message may correspond to the resulting or target colour volume of the set of processed pictures. In this case, the above ccv_for_decoded_picture_flag may be set to 0.

ccv_adaptation_information_present _flag may indicate if additional information related to the adaptation of the colour volume considered as a result of a processing is present. If ccv_adaptation_information_present _flag equals to 1, additional information related to the adaptation of the colour volume considered as a result of a processing may be present. If ccv_adaptation_information_present_ flag equals to 0, no additional information related to the adaptation of the colour volume considered as a result of a processing may be present.

cvv_ratio_luminance_value, when ccv_adaptation_information_present_flag is equal to 1, may specify the amount of luminance adaptation through luminance decrease or increase (accordingly with the value of the ccv_ratio_luminance_sign_flag field) that may be achieved by the processing corresponding to the colour volume. It may be coded over 8 bits in a preferred embodiment. In some embodiment, when ccv_ratio_luminance_valueis equal to 0, it may be interpreted as the amount of luminance adaptation as a result of the processing corresponding to the colour volume is not conveyed or not known. In this case, the ccv_ratio_luminance_sign_flag may be omitted (e.g., not transmitted).

In a variant, ccv_ratio_luminance_valuemay specify the expected percentage of luminance adaptation through (e.g., average) luminance decrease or increase (accordingly with the value of the ccv_ratio_luminance_sign_flag field) that the processing may achieve. The percentage of luminance adaptation may be considered relatively to the average luminance of the content before applying the processing. The percentage ratio may be computed using the following equation:

$$ratio = \frac{ccv\_ratio\_luminance\_value}{100}$$

The expected luminance after application of the processing may be derived as follows:

If *ccv_ratio_luminance_sign_flag* == 1:

$$luminance_{new} = (1 - ratio) * luminance_{old}$$

If ccv_ratio_luminance_sign _flag == 0:

$$luminance_{new} = (1 + ratio) * luminance_{old}$$

ccv_ratio_luminance_sign_flag may specify if the value of ccv_ratio_luminance_value may be considered as negative or positive. If ccv_ratio_luminance_sign_flag equals 0, the processing corresponding to the colour volume may result in an increase of content luminance. If ccv_ratio_luminance_sign_flag equals 1, the processing may result in a decrease in terms of content luminance.

ccv_ratio_energy_value,, when ccv _adaptation_information_present _flag is equal to 1, may specify the amount of energy adaptation through energy decrease or increase (accordingly with the value of the ccv_ratio_energy_sign _flag field) that may be achieved by the processing corresponding to the target colour volume. It may be coded over 8 bits in a preferred embodiment. In some embodiment, when ccv_ratio_energy_value is equal to 0, it may be interpreted as the amount of energy adaptation as a result of the processing corresponding to the target colour volume is not conveyed or not known. In this case, the cvv_ratio_energy_sign_flag may be omitted (e.g., not transmitted).

cvv_ratio_energy_sign_flag may specify if the value of cvv_ratio_energy _value may be considered as negative or positive. If cvv_ratio_energy_sign_flag equals 0, the processing related to the target colour volume may result in an increase of energy consumption. If ccv_ratio_energy_sign_flag equals 1, the processing related to the target colour volume may result in a decrease in terms of energy consumption.

ccv_expected_quality may specify the quality of the video after applying the processing related to the target colour volume. Examples of metrics are PSNR, V-MAF or SSIM values for the modified picture after applying the processing related to the target colour volume as specified in the table below. This parameter may be expressed as an absolute value or as a percentage value of reduction of quality according to a selected quality metric in comparison with its nominal value.

In the above definitions of the adaptation metadata syntax elements, other embodiments may define the syntax elements relatively to average values of luminance ratio, expected quality and energy ratio. In other embodiments, the syntax elements may be defined to maximal, minimal values of luminance ratio, expected quality and energy ratio. Other criteria may be used to select the values of the luminance ratio, expected quality and energy ratio.

ccv_video_quality_metric may indicate the quality metric to be considered when considering the loss of quality after applying the processing related to the target colour volume. An example of set of quality metrics is illustrated in the Table 13.

Table 13

| cw_video_quality_metric field value | Metric name |
|---|---|
| 0x00 | PSNR |
| 0x01 | SSIM |
| 0x02 | wPSNR |
| 0x03 | WS-PSNR |
| 0x04 | V-MAF |
| 0x05..0x07 | Reserved for future metrics |

cvv_display_model is a bit field mask which may indicate the display models on which the processing related to the target colour volume may be used. The possible values are the same as those listed above in table 7. For example, cvv _display_type_field=$11_2$ (corresponding to having the two first bits equal to 1 in the bitfield, in the base-2 numeral system) may mean that the processing can be used for both "Transmissive pixel" and "Emissive pixel" display models.

In an alternative embodiment, additional information representing the adaptation in terms of brightness or lightness that may result from the processing which corresponds to the target colour volume are added in the CCV SEI message.

In at least one embodiment, the CCV SEI message may carry simultaneously, in addition to the target color volume information, additional information representing the adaptation that results from the processing and an identifier, therefore combining the syntax of tables 11 and 12, as illustrated in table 14. The syntax elements of table 14 are identical to those described in tables 11 and 12.

Table 14

| content_colour_volume( payloadSize) { | Descriptor |
|---|---|
| ccv_cancel_flag | u(1) |
| if( !ccv_cancel_flag ) { | |
| ccv_persistence flag | u(1) |
| ccv_primaries_present flag | u(1) |
| ccv_min luminance value_present flag | u(1) |
| ccv_max luminance value_present flag | u(1) |
| ccv_avg luminance value_present flag | u(1) |

(continued)

| | Descriptor |
|---|---|
| ccv_identifier_present flag | u(1) |
| ccv_adaptation_information_present_flag | u(1) |
| if( ccv_primaries_present_flag) | |
| for( c = 0; c < 3; c++ ) { | |
| ccv_primaries_x[ c ] | i(32) |
| ccv_primaries_y[ c ] | i(32) |
| } | |
| if( ccv_min_luminance _value_present_flag) | |
| ccv_mm_luminance_value | u(32) |
| if( ccv_max_luminance_value_present_flag) | |
| ccv_max_luminance_value | u(32) |
| if( ccv_avg_luminance_value_present_flag) | |
| ccv_avg_luminance_value | u(32) |
| if( ccv_identifier_present_flag){ | |
| ccv_id | uv(e) |
| ccv_for decoded_picture flag | u(1) |
| } | |
| if( ccv_adaptation_information_present_flag){ | |
| ccv_ratio_luminance_value | u(8) |
| ccv_ratio luminance sign flag | u(1) |
| ccv_ratio_energy_value | u(8) |
| ccv_ratio energy_sign flag | u(1) |
| ccv_quality_metric | u(3) |
| ccv_expected_quality | u(8) |
| ccv_display_model | u(4) |
| } | |
| } | |

In at least one embodiment, in addition to the elements of Table 12, the CCV SEI message may carry information related to the white point resulting from the processing applied to the pictures and related to the target colour volume, as illustrated in table 15.

Table 15

| content_colour_volume( payloadSize ) { | Descriptor |
|---|---|
| ccv_cancel_flag | u(1) |
| if( !ccv_cancel_flag ) { | |
| ccv_persistence flag | u(1) |
| ccv_primaries_present flag | u(1) |
| ccv_min luminance value_present flag | u(1) |
| ccv_max luminance value_present flag | u(1) |
| ccv_avg luminance value_present flag | u(1) |
| ccv_white_point present flag | u(1) |

(continued)

| | |
|---|---|
| ccv_adaptation_information_present_flag | u(1) |
| if( ccv_primaries_present_flag) | |
| for( c = 0; c < 3; c++ ) { | |
| ccv_primaries_x[ c ] | i(32) |
| ccv_primaries_y[ c ] | i(32) |
| } | |
| if( ccv_min_luminance _value_present_flag) | |
| ccv_mm_luminance_value | u(32) |
| if( ccv_max_luminance_value_present_flag) | |
| ccv_max_luminance_value | u(32) |
| if( ccv_avg_luminance_value_present_flag) | |
| ccv_avg luminance value | u(32) |
| if( ccv _white_point_present_flag ){ | |
| ccv_white_point_x | u(16) |
| ccv_white_point_y | u(16) |
| } | |
| if(ccv_adaptation information_present flag){ | |
| ccv_ratio_luminance_value | u(8) |
| ccv_ratio luminance sign flag | u(1) |
| ccv_ratio_energy_value | u(8) |
| ccv_ratio energy_sign flag | u(1) |
| ccv_quality_metric | u(3) |
| ccv_expected_quality | u(8) |
| ccv_display_model | u(4) |
| } | |
| } | |

The corresponding syntax elements are the following:

cvv_white_point_present_flag equal to 1 may specify that the syntax elements cvv_white_point_x and cvv_white_point_y are present. cvv_white_point_present_flag equal to 0 may specify that the syntax elements cvv _white_point _x[ c ] and cvv _white_point _y[ c ] are not present.

cvv_white_point_x, when in the range of 5 to 37 000, inclusive, may specify the normalized x chromaticity coordinate of the white point of the content colour volume, according to the CIE 1931 definition of x as specified in ISO/CIE 11664-1, in normalized increments of 0.00002. When cvv_white_point_x is not in the range of 5 to 37 000, inclusive, the normalized x chromaticity coordinate of the white point of the content colour volume may be indicated to be unknown or unspecified or specified by other means not specified in this document.

ccv_white_point_y, when in the range of 5 to 42 000, inclusive, may specify the normalized y chromaticity coordinate of the white point of the maximal content colour volume, according to the CIE 1931 definition of y as specified in ISO/CIE 11664-1, in normalized increments of 0.00002. When ccv_white_point_y is not in the range of 5 to 42 000, inclusive, the normalized y chromaticity coordinate of the white point of the maximal colour volume may be indicated to be unknown or unspecified or specified by other means not specified in this document.

In an embodiment, the white point metadata may be defined alone (no adaptation metadata). In another

EP 4 773 606 A1

embodiment, the white point metadata may be defined with the content colour volume identifier.

In another embodiment, the content colour volume may correspond to the average content colour volume. In another embodiment, the content colour volume may correspond to the minimal content colour volume for a given set of pictures. In another embodiment, the content colour volume may correspond to some criterion defined by an external means.

In at least one embodiment, it is proposed to convey the same information as in the previous embodiment but through the use of an additional flag allowing for an extension of the CCV SEI message. Two example syntaxes are provided below without and with the specification of the white point metadata, respectively in tables 16 and 17. Additional embodiments may correspond to any selection of metadata between the identifier's metadata, the adaptation metadata and the white point metadata.

Table 16

| content_colour_volume( payloadSize) { | Descriptor |
|---|---|
| ccv_cancel_flag | u(1) |
| if( !ccv_cancel_flag ) { | |
| ccv_persistence flag | u(1) |
| ccv_primaries_present flag | u(1) |
| ccv_min luminance value_present flag | u(1) |
| ccv_max luminance value_present flag | u(1) |
| ccv_avg luminance value_present flag | u(1) |
| ccv_extension_1_present_flag | u(1) |
| ccv_reserved_zero_1bits | u(1) |
| if( ccv_primaries_present_flag) | |
| for( c = 0; c < 3; c++ ) { | |
| ccv_primaries_x[ c ] | i(32) |
| ccv_primaries_y[ c ] | i(32) |
| } | |
| if( ccv_min_luminance _value_present_flag) | |
| ccv_mm_luminance_value | u(32) |
| if( ccv_max_luminance_value_present_flag) | |
| ccv_max_luminance_value | u(32) |
| if( ccv_avg_luminance_value_present_flag) | |
| ccv_avg luminance value | u(32) |
| if( ccv_extension_1_present_flag){ | |
| ccv_identifier_present flag | u(1) |
| ccv_adaptation_information_present_flag | u(1) |
| if( ccv_identifier_present_flag ){ | |
| ccv_id | uv(e) |
| ccv_for_decoded_picture_flag | u(1) |
| } | |
| if( ccv_adaptation_information_present_flag){ | |
| ccv_ratio_luminance_value | u (8) |
| ccv_ratio luminance sign flag | u(1) |
| ccv_ratio_energy_value | u(8) |

(continued)

| | |
|---|---|
| ccv_ratio_energy_sign_flag | u(1) |
| ccv _quality_metric | u(3) |
| ccv_expected_quality | u (8) |
| ccv_display_model | u(4) |
| } | |
| } | |
| } | |

Table 17

| content_colour_volume( payloadSize) { | Descriptor |
|---|---|
| ccv_cancel_flag | u(1) |
| if( !ccv_cancel_flag ) { | |
| ccv_persistence flag | u(1) |
| ccv_primaries_present flag | u(1) |
| ccv_min luminance value_present flag | u(1) |
| ccv_max luminance value_present flag | u(1) |
| ccv_avg luminance value_present flag | u(1) |
| ccv_extension_1_present_flag | u(1) |
| ccv_reserved_zero_1bits | u(1) |
| if( ccv_primaries_present_flag) | |
| for( c = 0; c < 3; c++ ) { | |
| ccv_primaries_x[ c ] | i(32) |
| ccv_primaries_y[ c ] | i(32) |
| } | |
| if( ccv_min_luminance _value_present_flag) | |
| ccv_mm_luminance_value | u(32) |
| if( ccv_max_luminance_value_present_flag) | |
| ccv_max_luminance_value | u(32) |
| if( ccv_avg_luminance_value_present_flag) | |
| ccv_avg luminance value | u(32) |
| if( ccv_extension_1_present_flag){ | |
| ccv_identifier_present flag | u(1) |
| ccv_adaptation_information_present_flag | u(1) |
| ccv_white_point_present flag | u(1) |
| if( ccv_identifier_present_flag ){ | |
| ccv_id | uv(e) |
| ccv_for decoded_picture flag | u(1) |
| } | |
| if( ccv_adaptation_information_present_flag){ | |
| ccv_ratio_luminance_value | u (8) |

(continued)

| | |
|---|---|
| ccv_ratio luminance sign flag | u(1) |
| ccv_ratio_energy_value | u(8) |
| ccv_ratio_energy_sign_flag | u(1) |
| ccv _quality_metric | u(3) |
| ccv_expected_quality | u (8) |
| ccv_display_model | u(4) |
| } | |
| if( ccv _white_point_present_flag){ | |
| ccv_white_point_x | u(16) |
| ccv_white_point_y | u(16) |
| } | |
| } | |
| } | |

The new syntax element has the following definition:
cvv_extension_1 _present_flag equal to 1 may specify that a set of metadata provided as a first extension set is present. cvv_extension_1_present_flag equal to 0 may specify that no metadata provided as a first extension set are present.
In at least one embodiment, metadata indicating information related to the light level associated to the colour volume are added in the syntax as illustrated in Table 18.

Table 18

| content_colour_volume( payloadSize ) { | Descriptor |
|---|---|
| ccv_cancel_flag | u(1) |
| if( !ccv_cancel_flag ) { | |
| ccv_persistence flag | u(1) |
| ccv_primaries_present flag | u(1) |
| ccv_min luminance value_present flag | u(1) |
| ccv_max luminance value_present flag | u(1) |
| ccv_avg luminance value_present flag | u(1) |
| ccv_extension_1_present_flag | u(1) |
| ccv_reserved_zero_1bits | u(1) |
| if( ccv_primaries_present_flag ) | |
| for( c = 0; c < 3; c++ ) { | |
| ccv_primaries_x[ c ] | i(32) |
| ccv_primaries_y[ c ] | i(32) |
| } | |
| if( ccv_min_luminance_value_present_flag ) | |
| ccv_mm_luminance_value | u(32) |
| if( ccv_max_luminance_value_present_flag) | |
| ccv_max_luminance_value | u(32) |
| if( ccv_avg_luminance_value_present_flag ) | |
| ccv_avg luminance value | u(32) |

(continued)

| | |
|---|---|
| if( ccv_extension_1_present_flag ){ | |
| ccv_identifier_present flag | u(1) |
| ccv_adaptation information_present flag | u(1) |
| ccv_white_point_present flag | u(1) |
| ccv_max content light level_present flag | u(1) |
| ccv_max_pic average light level_present flag | u(1) |
| if( ccv_identifier_present_flag ){ | |
| ccv_id | uv(e) |
| ccv_for decoded_picture flag | u(1) |
| } | |
| if( ccv_adaptation_information_present_flag ){ | |
| ccv_ratio_luminance_value | u (8) |
| ccv_ratio luminance sign flag | u(1) |
| ccv_ratio_energy_value | u(8) |
| ccv_ratio_energy_sign_flag | u(1) |
| ccv _quality_metric | u(3) |
| ccv_expected_quality | u (8) |
| ccv_display_model | u(4) |
| } | |
| if( ccv _white_point_present_flag){ | |
| ccv_white_point_x | u(16) |
| ccv_white_point_y | u(16) |
| if( ccv_max_content_light_level_present_flag) | |
| ccv_max content light level | u(16) |
| if( ccv_max_pic average light level_present flag) | |
| ccv_max_pic average light level | u(16) |
| } | |
| } | |
| } | |

The new syntax elements have the following definition:

ccv_max_content_light_level, when not equal to 0, may indicate an upper bound on the maximum light level of the colour volume in a 4:4:4 representation of red, green, and blue colour primary intensities (in the linear light domain) for all pictures for which the SEI message persists, in units of candelas per square metre. When ccv_max_content_light-t_level equal to 0, no such upper bound may be indicated.

ccv_max_pic_average_light_level, when not equal to 0, may indicate an upper bound on the maximum average light level of the colour volume in a 4:4:4 representation of red, green, and blue colour primary intensities (in the linear light domain) for all pictures for which the SEI message persists, in units of candelas per square metre. When ccv _max_pic_average_light_level equal to 0, no such upper bound may be indicated.

Such metadata indicating information related to the light level associated to the colour volume may be added in any of the embodiments described above.

In some embodiments, luminance adaptation is replaced by brightness adaptation or light level adaptation according to the following definitions: "luminance" is the light that the light source creates (objectively measured in candela per square meters) whereas "brightness" is how dim or bright that light looks to individuals. Brightness is a subjective measure that cannot be measured but can be scaled by a certain percentage.

Different representations may be used for the tcvi_ratio_luminance_value or the ccv_ratio_luminance_value syntax elements. A first representation, as illustrated in Table 19, is a value coded over 2 bits expressing a percentage of adaptation ratio.

Table 19

| tcvi_ratio_luminance_value or ccv_ratio_luminance_value | Interpretation |
| --- | --- |
| 0 | The luminance adaptation ratio is 5% |
| 1 | The luminance adaptation ratio is 10% |
| 2 | The luminance adaptation ratio is 20% |
| 3 | The luminance adaptation ratio is 30% |

A second representation for the tcvi_ratio_luminance_value or the ccv_ratio_luminance_value is a percentage value (i.e., between 0 and 100), for example coded over 4 bits, providing an amount of luminance adaptation the post-filter should achieve.

A third representation for the tcvi_ratio_luminance_value or the ccv_ratio_luminance_value is a signed value. In this case, the sign flag tcvi_ratio_luminance_sign_flag or the ccv_ratio_luminance_sign_flag is no longer needed. Using such representation for example coded over 8 bits, values below 128 should be considered as negative, values above 128 should be considered as positive, value = 0 corresponds to a decrease of luminance equal to e.g, 30%, value = 128 corresponds to no change and value = 255 corresponds to an increase of luminance equal to e.g., 30%.

The semantics of these three representations may apply similarly for energy and brightness ratios and quality levels.

**Figure 7** illustrates an example of video distribution system where the bitstream comprises at least one TCVI SEI message according to embodiments. The mastering process 710 of the video is performed using a mastering display, producing a mastered video and information related to the mastering display colour volume. It may also provide information on the real colour volume of the content. The encoding process 720 takes as input the video and produces the bitstream. It also signals in a MVCD SEI message the information related to the mastering display colour volume, and in one or more CCV SEI messages the information related to the pictures of the video (several CCV SEI messages may be signaled to adapt to the temporal variations of the content characteristics). One or more TCVI SEI messages (TCVI SEI 1, TCVI SEI 2,..., TCVI SEI N) may also be inserted, corresponding for example to different target colour volumes. The bitstream is provided to a decoder. The decoder produces 730 the decoded pictures, as well as the MDVC SEI and CCV SEI messages. TCVI SEI messages are also decoded, and one TCVI SEI message is selected 740 among the TCVI SEI messages available. The selection is for example done according to the colour volume of a target rendering display, or to a desired energy savings level. The decoded pictures are then post-processed 750 based on the MDVC SEI message, the CCV SEI message and the selected TCVI SEI message. When a single TCVI SEI message is present in the bitstream, the selection of the TCVI SEI may be skipped.

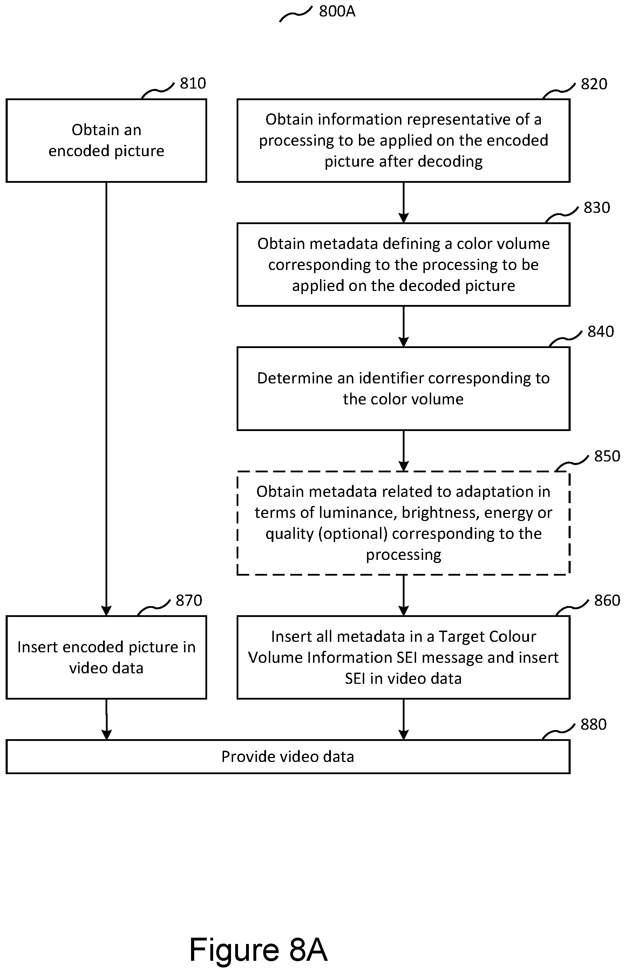

**Figure 8A** illustrates an example process for encoding video data comprising a TCVI SEI message according to embodiments. The process 800A is for example implemented by a processor 1010 of a device 1000 of figure 1, a system 210 of figure 2, or an encoder 300 of figure 3. The process 800A is related to the embodiments using a TCVI SEI message. In step 810, the processor obtains a picture to be encoded and encodes it, for example as described with reference to figure 3, to obtain an encoded picture. In step 820, the processor obtains an information representative of a (post)processing to be applied to the decoded version of the picture, once available. In step 830, the processor obtains metadata describing the colour volume corresponding to the picture (potentially more than one) after the processing is applied, for example, the limits of the colour volume of the picture resulting from the processing. In step 840, the processor determines an identifier for this colour volume. Optionally, in step 850, the processor obtains additional metadata related to the adaptation of the colour volume during the processing in terms of luminance, brightness, quality and energy. In step 860, the colour volume metadata and the colour volume identifier are inserted in a TCVI SEI message according to the syntax of any of tables 4 to 10 and the TCVI SEI message is inserted in the video data (e.g., a bitstream or a file). The TCVI SEI message may also comprise the optional adaptation metadata. In step 870, the encoded picture is inserted in the video data. Steps 860 and 870 can also be understood as generating video data comprising the encoded picture and the TCVI SEI message. In step 880, the processor provides the video data, for example to a decoder.

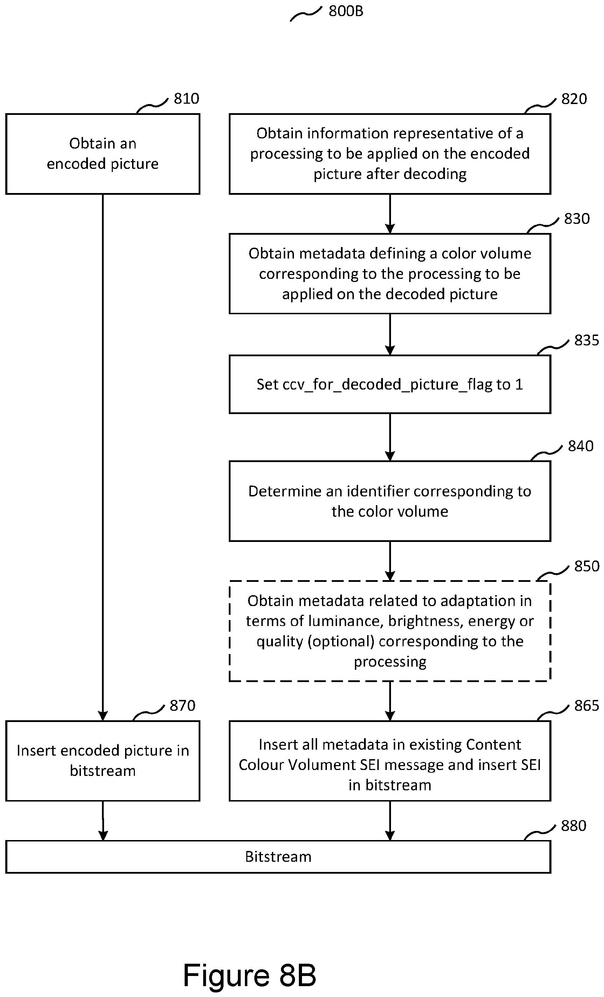

**Figure 8B** illustrates an example process for encoding video data comprising a CCV SEI message according to embodiments. The process 800B is for example implemented by a processor 1010 of a device 1000 of figure 1, a system 210 of figure 2, or an encoder 300 of figure 3. The process 800B is related to the embodiments using a CCV SEI message. In step 810, the processor obtains a picture to be encoded and encodes it, for example as described with reference to figure 3, to obtain an encoded picture. In step 820, the processor obtains an information representative of a (post)processing to be applied to the decoded version of the picture, once available. In step 830, the processor obtains metadata describing the colour volume corresponding to the picture (potentially more than one) after the processing is applied, for example, the limits of the colour volume of the picture resulting from the processing. In step 835, the processor sets an indicator signaling that the colour volume described in the CCV SEI message corresponds to the target colour volume after some processing of the decoded picture. In practice, according to the syntax of tables 11 to 17, this is done by setting the ccv_for_decoded_picture_flag to 1. In step 840, the processor determines an identifier for this colour volume. Optionally, in step 850, the processor obtains additional metadata related to the adaptation of the colour volume during the processing in terms of luminance, brightness, quality and energy. In step 865, the colour volume metadata and the colour volume identifier are inserted in a CCV SEI message according to the syntax of any of tables 11 to 17 and the CCV SEI message is inserted in the video data (e.g., a bitstream or a file). The CCV SEI message may also comprise the optional adaptation metadata. In step 870, the encoded picture is inserted in the video data. Steps 860 and 870 can also be understood as generating video data comprising the encoded picture and the CCV SEI message. In step 880, the processor provides the video data, for example to a decoder.

In the example processes of figures 8A and 8B, the order of the above steps may be changed, for example by determining or obtaining first the adaptation metadata and then the identifier metadata, before inserting them in the video data.

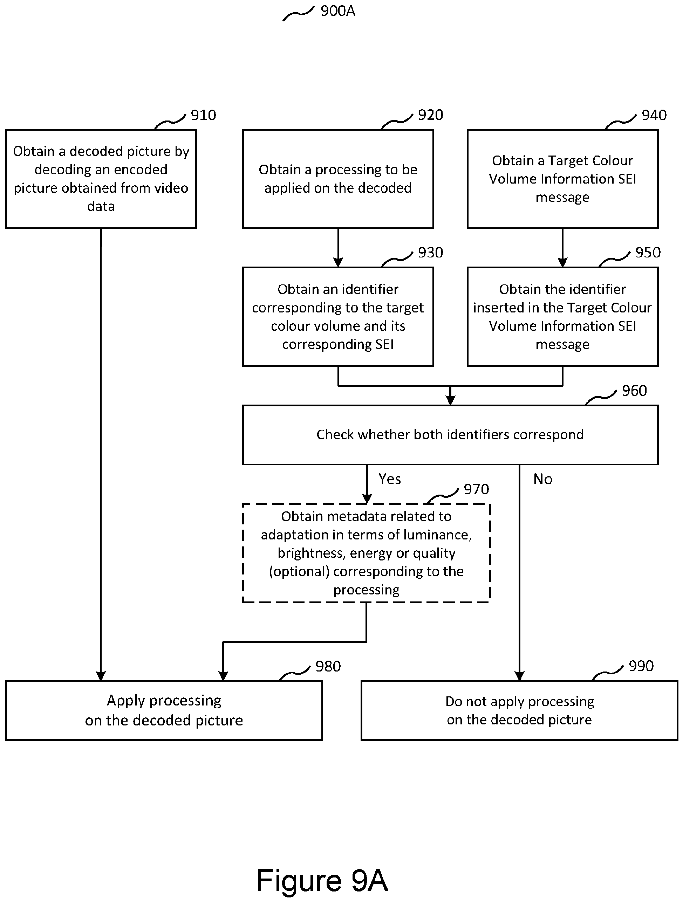

**Figure 9A** illustrates an example process for decoding video data comprising a TCVI SEI message according to embodiments. The process 900A is for example implemented by a device 1000 of figure 1, a system 230 of figure 2, or a decoder 400 of figure 4. In this process some of the step may be executed in parallel or subsequently. In step 910, the processor obtains an encoded picture from video data (e.g., a bitstream or a file) and decodes it, for example as described with reference to figure 4, to obtain a decoded picture. In step 920, the processor obtains an information indicative of a processing that should be applied to the decoded picture, either by retrieving an SEI message indicating such a processing (e.g., a tone mapping operation defined through an NNPFC SEI message) or by an external means (e.g., from an external application, a service provider, the device on which runs the decoding process, etc.). In step 930, the processor obtains an identifier of the corresponding target colour volume after application of the processing. In step 940, the processor obtains a TCVI SEI message from the video data, and in step 950 determines the identifier associated to the TCVI SEI message. In step 960, the processor compares this identifier with the identifier of the corresponding target color volume obtained in step 930. When the two identifiers match, in step 980, the processor applies the processing on the decoded picture. In an optional step 970 before applying the processing, the processor may obtain adaptation metadata from the TCVI SEI message. The processing will be constrained by the target colour volume, in other words, the processing will be done within the limits of the target colour volume obtained from the TCVI SEI message. When the two identifiers do not match in the test of step 960, then, in step 990, the processing is not applied on the decoded picture.

In at least one embodiment, in step 990, it might be decided to apply the processing with a default processing and/or default adaptation metadata.

In at least one embodiment, an additional step may be added before applying the processing in step 980, which consists in checking whether the target colour volume obtained after the processing will match some criterion. A first example of criterion is for example that the gamut of the display on which the processed image should be rendered. Another criterion might be to check whether the target colour volume will correspond to (or is below/above) a given percentage of reduction or increase in terms of luminance, brightness, quality and/or energy. If the criterion is not respected, it may be decided not to apply the processing and thus to jump to step 990.

In at least one embodiment, more than one processing may be applied to a decoded picture (or a series of decoded pictures) and all processings contain the same colour volume identifier, corresponding to one single Target Colour Volume Information SEI message. In this case, both processings, although different (e.g., a Tone Mapping operation and an Energy reduction operation), use the same colour volume specified in the TCVI SEI message with the expected identifier.

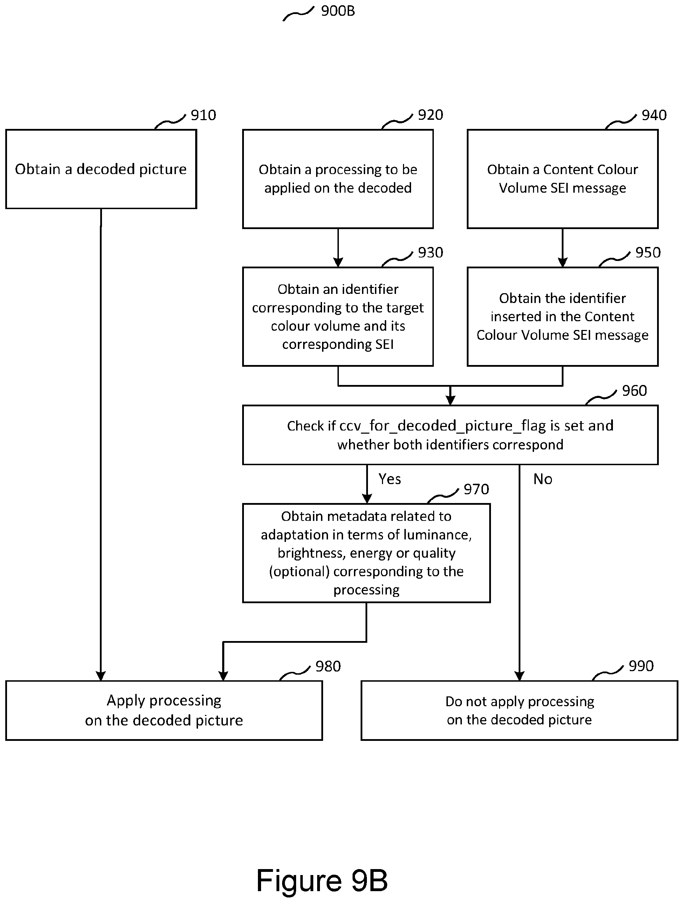

**Figure 9B** illustrates an example process for decoding video data comprising a CCV SEI message according to embodiments. This process 900B is very similar to the decoding process 900A. The difference is related to the use of a CCV SEI message instead of the TCVI SEI message. Therefore, the data of steps 940 and 950 are obtained from the CCV SEI message instead of the TCVI SEI message. In addition, a supplementary test is done in step 960 to verify that the CCV SEI is related to the content after (post-)processing. In at least one embodiment, this may be done by testing that the ccv_for_decoded_picture_flag is set to 1. The other steps are identical to the corresponding steps of figure 9A.

Any other order of the steps of process 900B fulfilling the same function may be used. For example, testing the ccv_for_decoded_picture_flag may be the first operation before steps 930, 940 and further steps.

Although some parts of the description refer to video, the embodiments are not restricted to conventional (2D) videos and apply to any type of visual media content such as static images, stereoscopic (3D) images or videos, 360° immersive images or video, point clouds, based on the same principles as described above.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures provide some embodiments, but other embodiments are contemplated and the discussion of these figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, 128 for the block size. The specific values are for example purposes and the aspects described are not limited to these specific values.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, adapting the illumination compensation process.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

This application describes a variety of aspects, including tools, features, embodiments, models, approaches, etc.

Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "frame", "slice" and "tiles" may be used interchangeably. Usually, but not necessarily, the term "reconstructed" is used at the encoder side while "decoded" is used at the decoder side.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

**Claims**

1. A method comprising:

obtaining an encoded picture;
obtaining metadata defining a colour volume corresponding to a result of a processing to be applied on the encoded picture after decoding;
obtaining an identifier corresponding to the colour volume;
inserting colour volume metadata and identifier in a supplemental enhancement information message;
generating video data comprising the encoded picture and the supplemental enhancement information message; and
providing the video data.

2. A method comprising:

obtaining, from video data, an encoded picture, information representative of a processing to be applied on the encoded picture after decoding, an identifier corresponding to a colour volume corresponding to a result of the processing, a supplemental enhancement information message comprising metadata defining a colour volume and an associated identifier;
decoding the encoded picture to obtain a decoded picture;
comparing the identifier corresponding to the colour volume corresponding to the result of the processing with the identifier associated with the color volume metadata of the supplemental enhancement information message, responsively applying the processing to the decoded picture based on the color volume metadata; and
providing the processed picture.

3. The method of any of claim 1 or 2, wherein the metadata defining a colour volume comprises normalized chromaticity coordinates of colour primary components.

4. The method of any of claim 1 to 3, wherein the metadata defining a colour volume comprises at least one of a maximum, a minimum or an average luminance.

5. The method of any of claim 1 to 4, wherein the metadata defining a colour volume comprises information related to an adaptation of an original colour volume into the colour volume corresponding to the result of the processing.

6. The method of claim 5, wherein the adaptation is related to the luminance, brightness, energy or color of the decoded picture.

7. The method of claim 5 or 6, wherein the metadata further comprises an expected quality expressed an absolute value or as a percentage value of reduction of quality according to a selected quality metric.

8. The method of any of claim 1 to 7, wherein the metadata further comprises information representative of a white point of the colour volume corresponding to the result of the processing.

9. The method of any of claim 1 to 8, wherein the metadata further comprises information representative of a container colour volume that specifies a format in which the colour samples of the processed picture are coded.

10. The method of any of claim 1 to 9, wherein the supplemental enhancement information message further comprises an information indicating if the colour volume is related to the colour volume of the encoded picture or to the colour volume of the result of the processing.

11. The method of any of claim 1 to 10, wherein the supplemental enhancement information message is a Content Color Volume Supplemental Enhancement Information message as defined in ISO/IEC 23002-7 specification

12. An apparatus comprising one or more processors configured to:

   obtain an encoded picture;
   obtain metadata defining a colour volume corresponding to a result of a processing to be applied on the encoded picture after decoding;
   obtain an identifier corresponding to the colour volume;
   insert colour volume metadata and identifier in a supplemental enhancement information message;
   generate video data comprising the encoded picture and the supplemental enhancement information message; and
   provide the video data.

13. An apparatus comprising one or more processors configured to:

   obtain, from video data, an encoded picture, information representative of a processing to be applied on the encoded picture after decoding, an identifier corresponding to a colour volume corresponding to a result of the processing, a supplemental enhancement information message comprising metadata defining a colour volume and an associated identifier;
   decode the encoded picture to obtain a decoded picture;
   compare the identifier corresponding to the colour volume corresponding to the result of the processing with the identifier associated with the color volume metadata of the supplemental enhancement information message, responsively apply the processing to the decoded picture based on the color volume metadata; and
   provide the processed picture.

14. A non-transitory computer readable medium containing data content generated according to the method of any one of claims 1 to 11.

15. A computer program product comprising instructions for performing the method of any one of claims 1 to 11 when executed by one of more processors.

1000

Figure 1

200

Figure 2

Figure 3

Figure 4

Figure 5

Figure 6

Figure 7

~ 800A

| ~ 810 |
|---|
| Obtain an encoded picture |

| ~ 820 |
|---|
| Obtain information representative of a processing to be applied on the encoded picture after decoding |

| ~ 830 |
|---|
| Obtain metadata defining a color volume corresponding to the processing to be applied on the decoded picture |

| ~ 840 |
|---|
| Determine an identifier corresponding to the color volume |

| ~ 850 |
|---|
| Obtain metadata related to adaptation in terms of luminance, brightness, energy or quality (optional) corresponding to the processing |

| ~ 870 |
|---|
| Insert encoded picture in video data |

| ~ 860 |
|---|
| Insert all metadata in a Target Colour Volume Information SEI message and insert SEI in video data |

| ~ 880 |
|---|
| Provide video data |

# Figure 8A

800B

**810**
Obtain an
encoded picture

**820**
Obtain information representative of a
processing to be applied on the encoded
picture after decoding

**830**
Obtain metadata defining a color volume
corresponding to the processing to be
applied on the decoded picture

**835**
Set ccv_for_decoded_picture_flag to 1

**840**
Determine an identifier corresponding to
the color volume

**850**
Obtain metadata related to adaptation in
terms of luminance, brightness, energy or
quality (optional) corresponding to the
processing

**870**
Insert encoded picture in
bitstream

**865**
Insert all metadata in existing Content
Colour Volument SEI message and insert SEI
in bitstream

**880**
Bitstream

# Figure 8B

~ 900A

| | |
|---|---|
| **910** Obtain a decoded picture by decoding an encoded picture obtained from video data | |

| **920** Obtain a processing to be applied on the decoded | **940** Obtain a Target Colour Volume Information SEI message |
|---|---|

| **930** Obtain an identifier corresponding to the target colour volume and its corresponding SEI | **950** Obtain the identifier inserted in the Target Colour Volume Information SEI message |
|---|---|

**960** Check whether both identifiers correspond

Yes

**970** Obtain metadata related to adaptation in terms of luminance, brightness, energy or quality (optional) corresponding to the processing

No

| **980** Apply processing on the decoded picture | **990** Do not apply processing on the decoded picture |
|---|---|

# Figure 9A

900B

| 910 | 920 | 940 |
|---|---|---|
| Obtain a decoded picture | Obtain a processing to be applied on the decoded | Obtain a Content Colour Volume SEI message |

930
Obtain an identifier corresponding to the target colour volume and its corresponding SEI

950
Obtain the identifier inserted in the Content Colour Volume SEI message

960
Check if ccv_for_decoded_picture_flag is set and whether both identifiers correspond

Yes                                    No

970
Obtain metadata related to adaptation in terms of luminance, brightness, energy or quality (optional) corresponding to the processing

980
Apply processing on the decoded picture

990
Do not apply processing on the decoded picture

# Figure 9B

# EUROPEAN SEARCH REPORT

**Application Number**

EP 25 30 5013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/098046 A1 (HUSAK WALTER J [US] ET AL) 5 April 2018 (2018-04-05) | 1-6, 8-10, 12-15 | INV. H04N19/46 H04N19/70 |
| Y | * paragraph [0014] - paragraph [0025] * <br> * paragraph [0053] - paragraph [0058] * <br> ----- | 7,11 | H04N19/85 |
| Y | WO 2025/002827 A1 (INTERDIGITAL CE PATENT HOLDINGS SAS [FR]) 2 January 2025 (2025-01-02) <br> * page 3, line 4 - line 9 * <br> * page 16, line 21 - line 24 * <br> ----- | 7,11 | |

**TECHNICAL FIELDS SEARCHED (IPC)**

H04N

The present search report has been drawn up for all claims

| Place of search | Date of completion of the search | Examiner |
|---|---|---|
| Munich | 11 June 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 30 5013

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2025

| Patent document cited in search report | Publication date | Patent family member(s) | Publication date |
|---|---|---|---|
| US 2018098046 A1 | 05-04-2018 | NONE | |
| WO 2025002827 A1 | 02-01-2025 | NONE | |

EPO FORM P0459

For more details about this annex : see Official Journal of the European Patent Office, No. 12/82